# FASCICULE DE BREVET EUROPEEN

(11) **EP 3 215 562 B1**
(45) Date de publication et mention de la délivrance du brevet: **10.06.2020**
(21) Numéro de dépôt: 15808709.8
(22) Date de dépôt: 05.11.2015
(51) Int. Cl.: C08K 5/29, B32B 1/08, C08K 3/16, C08K 3/32, C08L 77/00, C08L 79/08, F16L 11/04

(54) **COMPOSITION A BASE DE POLYAMIDE VISQUEUSE ET STABLE A LA TRANSFORMATION, SA PREPARATION ET SES UTILISATIONS**
TRANSFORMATIONSSTABILE ZUSAMMENSETZUNG MIT VISKOSEM POLYAMID, HERSTELLUNG DAVON UND VERWENDUNG DAVON
TRANSFORMATION-STABLE COMPOSITION COMPRISING VISCOUS POLYAMIDE, PRODUCTION THEREOF AND USE OF SAME

(30) Priorité: 05.11.2014 FR 1460666
(43) Date de publication de la demande: 13.09.2017
(73) Titulaire: Arkema France, 92700 Colombes (FR)
(72) Inventeur: BLONDEL, Philippe, 27300 Bernay (FR); GLASSON, Fabrice, 27170 Beaumontel (FR); FERNAGUT, François, 27300 Menneval (FR); FLAT, Jean-Jacques, 27170 Goupillieres (FR); DANG, Patrick, 27300 Saint-leger-de-rotes (FR)
(86) Numéro de dépôt international: PCT/FR2015/052987
(87) Numéro de publication internationale: WO 2016/071638

(56) Documents cités:
- WO-A2-2008/122743
- US-A- 5 360 888
- US-A1- 2006 074 158
- US-A1- 2008 314 471

## Description

La présente invention concerne l'utilisation d'au moins un catalyseur, d'au moins un stabilisant thermique au cuivre et d'au moins un oligo- ou poly-carbodiimide avec une matrice comprenant au moins un polymère thermoplastique, notamment un polyamide, pour constituer une composition visqueuse et stable à la transformation, en particulier à l'extrusion.

La présente invention concerne également la composition visqueuse et stable telle que ci-dessus définie.

L'invention concerne également l'utilisation de la composition ci-dessus pour la constitution d'une structure, telle que :
un tuyau flexible destiné au transport du gaz, à l'exploitation des gisements de pétrole sous la mer,
un tuyau flexible pour l'automobile, notamment pour le transport de carburant (essence, diesel, biodiésel ou éthanol), pour la réfrigération, pour l'air conditionné, pour des conduites réalisées notamment en extrusion soufflage pour l'alimentation en air,
un corps creux, un moulage ou un article de sport.

L'invention concerne aussi les structures obtenues à partir desdites compositions.
L'exploitation de gisements pétroliers situés en mer soumet à des conditions extrêmes les matériaux mis en œuvre, et en particulier les tuyaux reliant les différents dispositifs sous marins de la plate-forme et véhiculant les hydrocarbures extraits, qui sont généralement transportés à haute température et haute pression (par exemple, 700 bars).

Lors du fonctionnement des installations, il se pose donc des problèmes aigus de résistance mécanique, thermique et chimique des matériaux mis en œuvre. De tels tuyaux doivent en particulier résister au pétrole chaud, au gaz, à l'eau et aux mélanges d'au moins deux de ces produits pendant des durées pouvant atteindre 20 ans.

De manière classique, ces tuyaux comprennent une couche intérieure métallique non étanche formée par une bande en métal profilée enroulée en hélice telle qu'un feuillard agrafé. Cette couche intérieure métallique, qui donne la forme au tuyau, est revêtue, en général par extrusion, d'une couche de polymère destinée à conférer l'étanchéité. D'autres couches de protection et/ou de renfort telles que des nappes de fibres métalliques, des thermoplastiques et des caoutchoucs peuvent également être disposées autour de la couche de polymère étanche.

Pour des températures de service en dessous de 40°C, le polymère est du HDPE (polyéthylène haute densité) réticulé ou non. Pour des températures supérieures à 40°C, on utilise du polyamide et, pour des températures supérieures à 90°C, on met en œuvre du PVDF (polyfluorure de vinylidène).

Compte tenu du coût élevé du PVDF, et malgré l'implication de températures plus élevées que celles préconisées, le choix du polymère s'est porté sur les polyamides, tels que le PA11 et le PA12, bien connus pour leur bonne tenue thermique, leur résistance chimique, notamment aux solvants, leur résistance aux intempéries et aux rayonnements, leur imperméabilité aux gaz et aux liquides et leur qualité d'isolants électriques.

Ces polyamides sont déjà couramment utilisés pour la fabrication de tuyaux destinés à véhiculer des hydrocarbures extraits de gisements pétroliers situés sous la mer (offshore) ou non (on-shore) mais présentent toutefois l'inconvénient de vieillir trop vite.

Pour remédier à cet inconvénient et donc améliorer la résistance au vieillissement de ces tuyaux à base de polyamide, le document US 2003/0220449, au nom de la Demanderesse, propose une composition comprenant un mélange de PA, de plastifiant et d'un élastomère choisi parmi le caoutchouc nitrile butadiène (NBR) et le caoutchouc nitrile butadiène hydrogéné (H-NBR).

La mise en œuvre d'un élastomère du type NBR ou H-NBR dans les compositions décrites dans le document US 2003/0220449 présente plusieurs avantages par rapport aux compositions antérieures uniquement à base de polyamide et de plastifiant.

En particulier, l'introduction de l'un ou l'autre de ces élastomères permet d'augmenter de manière significative la résistance au vieillissement des tuyaux flexibles comprenant une telle couche, notamment en limitant la teneur pondérale en plastifiant.

Toutefois, les élastomères H-NBR (ou NBR hydrogénés) ont un coût élevé et nécessitent comme leurs homologues NBR non hydrogénés, par ailleurs de mettre en œuvre une étape préliminaire de broyage, ajoutant encore un surcoût à celui déjà engendré par la matière première NBR ou H-NBR.

Pour remédier aux inconvénients ci-dessus, la demanderesse décrit dans le document WO 08/122743 l'utilisation d'une composition comprenant au moins un polyamide semi-cristallin, une polyoléfine fonctionnalisée et un plastifiant pour la fabrication de tuyau flexible utilisés notamment pour l'exploitation des gisements de pétrole ou de gaz.

Par ailleurs, l'extrusion de tuyau de gros diamètre pour ces applications nécessitent des compositions présentant des viscosités à l'état fondu élevées mais également une stabilité à la transformation (le temps de résidence du produit lors de son extrusion est d'au moins 5 min ou 300 secondes), ainsi qu'une tenue à la thermo-oxydation.

Pour obtenir ce type de viscosités, la catalyse phosphorique permet, dans certaines conditions (taux de catalyse, vide, humidité), d'y arriver mais le produit peut continuer à évoluer à la transformation. De plus, cette post réactivité est sensible à l'humidité résiduelle des granulés.

Pour y remédier, la demande US 2013/0171388 décrit des matériaux PA avec des allongeurs de chaines (Bruggolen® et/ou Stabaxol®). Néanmoins, ces compositions possèdent également des indices de polymolécularité élevés et donc un nombre important de branchements ce qui a pour conséquence l'obtention de viscosités en solution élevées.

Ainsi la viscosité en solution n'est pas représentative de la viscosité à l'état fondu en raison des branchements potentiels dans le polyamide.

Par ailleurs, les compositions actuelles en polyamide ne permettent en général qu'une température de service des tuyaux de 60°C à 70°C dépendant du pH ou de l'indice d'acidité totale (TAN) du fluide transporté et du critère d'acceptance utilisé.

Il y a donc nécessité de trouver un compromis entre ces différents paramètres et d'augmenter par ailleurs la température de service des tuyaux.

Un premier objet de l'invention est donc l'utilisation d'au moins un catalyseur, d'au moins un stabilisant thermique au cuivre et d'au moins un oligo- ou poly-carbodiimide avec une matrice comprenant au moins un polymère thermoplastique, notamment un polyamide, pour constituer une composition visqueuse et stable à la transformation, en particulier à l'extrusion.

Un second objet de l'invention est la fourniture d'une composition ci-dessus définie et son utilisation pour la constitution d'une structure, telle que :
un tuyau flexible destiné au transport du gaz, à l'exploitation des gisements de pétrole sous la mer,
un tuyau flexible pour l'automobile, notamment pour le transport de carburant (essence, diesel, biodiésel ou éthanol), pour la réfrigération, pour l'air conditionné, pour des conduites réalisées notamment en extrusion soufflage pour l'alimentation en air,
un corps creux,

Un autre objet de l'invention est la fourniture de tuyaux flexibles ci-dessus définis.

### UTILISATION

La présente invention concerne l'utilisation d'au moins un catalyseur, d'au moins un stabilisant thermique au cuivre et d'au moins un oligo- ou poly-carbodiimide avec une matrice comprenant au moins un polyamide, pour constituer une composition présentant une viscosité à l'état fondu de 13000 à 23000 Pa.s, telle que déterminée par rhéologie oscillatoire à 270°C, à 10 rad/sec sous balayage d'azote avec 5% de déformation et un cisaillement de 10 sec-1 entre deux plans parallèles de 25 mm de diamètre et stable à la transformation, c'est-à-dire que la viscosité à l'état fondu n'évolue pas de plus de 70% en fonction du temps, et précisément entre 1 minute (temps nécessaire pour fondre le produit) et au moins 30 minutes, en particulier entre 1 minute et 30 minutes, en particulier à l'extrusion.

Les inventeurs ont trouvé de façon tout à fait inattendue que l'association de trois éléments, à savoir un catalyseur, un stabilisant thermique au cuivre et un oligo- ou poly-carbodiimide permettait, en combinaison avec un polymère thermoplastique, notamment un polyamide, d'obtenir des compositions qui présentent de bonnes viscosités, c'est-à-dire des viscosités à l'état fondu suffisamment élevées pour pouvoir être transformées, notamment par extrusion, sans pour autant augmenter la viscosité en solution, autrement dit la viscosité inhérente, ladite viscosité à l'état fondu étant par ailleurs suffisamment stable durant la transformation, notamment pour l'extrusion.

La viscosité inhérente est déterminée selon la norme ISO 307-2007 mais dans le m-crésol à la place de l'acide sulfurique, la température étant de 20°C.

Avantageusement, la viscosité à l'état fondu de la dite composition, déterminée par rhéologie oscillatoire à 270°C à 10 rad/sec sous balayage d'azote avec 5% de déformation et un cisaillement de 10 sec-1 sur un appareil Physica MCR301 entre deux plans parallèles de 25 mm de diamètre, n'évolue pas dans une proportion de plus de 20% entre 1 minute et au moins 5 minutes, en particulier entre 1 minute et 5 minutes.

Le temps de 5 minutes représente le temps de séjour de la matière, notamment dans l'extrudeuse au cours de la mise en œuvre.

Avantageusement, ladite composition présente de plus une tenue à la thermo-oxydation, caractérisée par la demi-vie (en heures) des matériaux et qui correspond au temps au bout duquel les éprouvettes ISO 527-2 1BA, vieillies dans l'air à 140°C, ont perdu la moitié de leur allongement à la rupture initial mesuré selon la norme ISO 527-2 (2012).

Avantageusement, la tenue à la thermoxydation est d'au moins 80 jours, en particulier 100 jours.

Avantageusement, ladite composition présente une viscosité à l'état fondu de 13000 à 23000 Pa.s, telle que déterminée par rhéologie oscillatoire à 270°C telle que définie ci-dessus.

Les inventeurs ont donc trouvé de manière tout à fait inattendue que le facteur clé pour la transformation de la composition de l'invention est sa rhéologie et non pas la viscosité inhérente. En effet, à viscosité inhérente constante, on s'aperçoit que seules les compositions comprenant le système catalyseur-stabilisant thermique au cuivre et l'oligo- ou poly-carbodiimide permettent d'obtenir une composition présentant une rhéologie adéquate, c'est-à-dire une viscosité à l'état fondu comprise de 13000 à 23000 Pa.s, la dite viscosité étant également sensiblement constante et stable à la transformation comme défini ci-dessus.

### Le catalyseur :

Le terme « catalyseur » désigne un catalyseur de polycondensation tel qu'un acide minéral ou organique.

Avantageusement, la proportion en poids de catalyseur est comprise de 50 ppm à 5000 ppm, en particulier de 100 à 3000 ppm par rapport au poids total de la composition.

Avantageusement, le catalyseur est choisi parmi l'acide phosphorique (H₃PO₄), l'acide phosphoreux (H₃PO₃), l'acide hypophosphoreux (H₃PO₂), ou un mélange de ceux-ci.

Avantageusement, la présente invention concerne donc l'utilisation ci-dessus définie d'au moins un catalyseur, en proportion en poids de catalyseur comprise de 50 ppm à 5000 ppm, en particulier de 100 à 3000 ppm par rapport au poids total de la composition, d'au moins un stabilisant thermique au cuivre et d'au moins un oligo- ou poly-carbodiimide, avec une matrice comprenant au moins un polymère thermoplastique, notamment un polyamide, ledit catalyseur étant choisi parmi l'acide phosphorique (H₃PO₄), l'acide phosphoreux (H₃PO₃), l'acide hypophosphoreux (H₃PO₂), ou un mélange de ceux-ci.

Avantageusement, le catalyseur est choisi parmi l'acide phosphorique (H₃PO₄), l'acide phosphoreux (H₃PO₃) dans une proportion comprise de 100 à 3000 ppm.

### Le stabilisant au cuivre :

Un exemple bien connu est le mélange de Cul et KI, où le ratio Cul:KI est typiquement compris entre 1:2 à 1:15. Un exemple d'un tel stabilisant est le PolyAdd P201 de la société Polyad Services.

On trouvera de plus amples détails sur les stabilisants à base de cuivre dans le brevet US 2,705,227.

Avantageusement, le stabilisant à base de cuivre est choisi parmi les halogénures de cuivre, l'acétate de cuivre, les halogénures de cuivre ou l'acétate de cuivre en mélange avec au moins un halogénure de métal alcalin, et leurs mélanges, de préférence les mélanges d'iodure de cuivre et d'iodure de potassium (CuI/KI).

Le stabilisant à base de cuivre peut également être un Bruggolen® H3386.

Avantageusement, le stabilisant thermique au cuivre utilisé pour constituer la composition ci-dessus définie est en proportion de 0,05% à 1%, en particulier de 0,05% à 0,3% en poids par rapport au poids total de la composition.

De préférence, le stabilisant thermique au cuivre est un mélange d'iodure de potassium et d'iodure de cuivre (KI/CuI).

De préférence, le mélange d'iodure de potassium et d'iodure de cuivre utile selon la présente invention se trouve dans un rapport de 90/10 à 70/30.

Avantageusement, la présente invention concerne donc l'utilisation ci-dessus définie d'au moins un catalyseur, d'au moins un stabilisant thermique au cuivre en proportion de 0,05% à 1%, en particulier de 0,05% à 0,3% en poids par rapport au poids total de la composition, et d'au moins un oligo- ou poly-carbodiimide, avec une matrice comprenant au moins un polymère thermoplastique, notamment un polyamide, ledit stabilisant thermique au cuivre étant un mélange d'iodure de potassium et d'iodure de cuivre (KI/CuI), de préférence dans un rapport de 90/10 à 70/30.

Avantageusement, la présente invention concerne l'utilisation ci-dessus définie d'au moins un catalyseur, en proportion en poids de catalyseur comprise de 50 ppm à 5000 ppm, en particulier de 100 à 3000 ppm par rapport au poids total de la composition, d'au moins un stabilisant thermique au cuivre en proportion de 0,05% à 1%, en particulier de 0,05% à 0,3% en poids par rapport au poids total de la composition, et d'au moins un oligo- ou poly-carbodiimide, avec une matrice comprenant au moins un polymère thermoplastique, notamment un polyamide, ledit catalyseur étant choisi parmi l'acide phosphorique (H₃PO₄), l'acide phosphoreux (H₃PO₃), l'acide hypophosphoreux (H₃PO₂), ou un mélange de ceux-ci et ledit stabilisant thermique au cuivre étant un mélange d'iodure de potassium et d'iodure de cuivre (KI/CuI), de préférence dans un rapport de 90/10 à 70/30.

Avantageusement, le catalyseur est choisi parmi l'acide phosphorique (H₃PO₄), l'acide phosphoreux (H₃PO₃) dans une proportion comprise de 100 à 3000 ppm.

### Le carbodiimide :

Le carbodiimide représente un oligomère et polymère carbodiimide classiquement connu et peut être préparé par polymérisation de diisocyanates. Cette réaction peut être accélérée par des catalyseurs et des produits avec élimination de dioxyde de carbone (J. Org. Chem, 28, 2069 (1963). J. Am. Chem. Soc. 84, 3673 (1962); Chem. Rev., 81, 589 (1981); Ange. Chem., 93, 855 (1981)).
Les réactifs des groupes terminaux NCO peuvent comprendre un composé réactif CH, NH ou OH, par exemple des esters d'acide malonique, de caprolactame, des alcools ou des phénols.

En variante, des mélanges de mono-et de diisocyanates peuvent être polymérisés pour obtenir des oligo- ou des polycarbodiimides contenant des groupes d'extrémités essentiellement non réactives.

Le carbodiimide utilisé est un oligo ou polycarbodiimide de formule générale :

R₁-N=C=N(-R₂-N=C=N-)ₙ-R₃

dans laquelle R₁ et R₃ représentent des alkyles en C₁ à C₂₀, des cycloalkyles en C₅ à C₂₀, des aryles ayant de 6 à 20 atomes carbones ou des aralkyles ayant de 7 à 20 atomes de carbone, chacun étant éventuellement substitué par un groupe isocyanate comprenant éventuellement un CH, un NH ou un composé réactif OH;
R₂ représente un groupe alkylène ayant 2 à 20 atomes de carbone, cycloalkylène ayant 5 à 20 atomes de carbone, arylène ayant 6 à 20 atomes de carbone ou aralkylène ayant 7 à 20 atomes de carbone;
n = 1 à 100, de préférence de 2 à 80 et de préférence 3 à 70.

L'oligo- ou polycarbodiimide peut être un homopolymère ou un copolymère, par exemple un copolymère de 2,4-diisocyanato-1,3,5-triisopropylbenzène et le 1,3-diisocyanato-3,4-diisopropylbenzène.

L'oligo- ou polycarbodiimide peut également être choisi parmi ceux décrits dans US 5,360,888.

L'oligo- ou polycarbodiimide peut également être cyclique, en particulier le TCC (Teijin carbodiimide cyclique commercialisé par la société Teijin).

Les oligo et polycarbodiimides appropriés peuvent être obtenus auprès de sources disponibles dans le commerce telles que Rhein Chemie, Raschig, Ziko ou Teijin.

Avantageusement la proportion en poids d'oligo- ou poly-carbodiimide utilisée est comprise de 0,1 à 3%, en particulier de 0,5 à 2%, notamment environ égale à 1% par rapport au poids total de la composition.

Avantageusement, l'oligo- ou poly-carbodiimide est choisi parmi un Stabiliser, en particulier le Stabilizer® 9000, un Stabaxol®, notamment un stabaxol® P, en particulier le Stabaxol® P100 ou le Stabaxol® P400, ou un mélange de ceux-ci.

Avantageusement, la présente invention concerne donc l'utilisation ci-dessus définie d'au moins un catalyseur, d'au moins un stabilisant thermique au cuivre, et d'au moins un oligo- ou poly-carbodiimide en proportion de 0,1 à 3%, en particulier de 0,5 à 2%, notamment égale à 1% en poids par rapport au poids total de la composition, avec une matrice comprenant au moins un polymère thermoplastique, notamment un polyamide, ledit oligo- ou poly-carbodiimide étant choisi parmi un Stabiliser, en particulier le Stabilizer® 9000, un Stabaxol®, notamment un stabaxol® P, en particulier le Stabaxol® P100 ou le Stabaxol® P400, ou un mélange de ceux-ci.

Avantageusement, la présente invention concerne l'utilisation ci-dessus définie d'au moins un catalyseur, en proportion en poids de catalyseur comprise de 50 ppm à 5000 ppm, en particulier de 100 à 3000 ppm par rapport au poids total de la composition, d'au moins un stabilisant thermique au cuivre, et d'au moins un oligo- ou poly-carbodiimide en proportion de 0,1 à 3%, en particulier de 0,5 à 2%, notamment égale à 1% en poids par rapport au poids total de la composition, avec une matrice comprenant au moins un polymère thermoplastique, notamment un polyamide, ledit catalyseur étant choisi parmi l'acide phosphorique (H₃PO₄), l'acide phosphoreux (H₃PO₃), l'acide hypophosphoreux (H₃PO₂), ou un mélange de ceux-ci et ledit oligo- ou poly-carbodiimide étant choisi parmi un Stabiliser, en particulier le Stabilizer® 9000, un Stabaxol®, notamment un Stabaxol® P, en particulier le Stabaxol® P100 ou le Stabaxol® P400, ou un mélange de ceux-ci.

Avantageusement, le catalyseur est choisi parmi l'acide phosphorique (H₃PO₄), l'acide phosphoreux (H₃PO₃) dans une proportion comprise de 100 à 3000 ppm.

Avantageusement, la présente invention concerne l'utilisation ci-dessus définie d'au moins un catalyseur, d'au moins un stabilisant thermique au cuivre en proportion de 0,05% à 1%, en particulier de 0,05% à 0,3% en poids par rapport au poids total de la composition, et d'au moins un oligo- ou poly-carbodiimide en proportion de 0,1 à3%, en particulier de 0,5 à 2%, notamment égale à 1% en poids par rapport au poids total de la composition, avec une matrice comprenant au moins un polymère thermoplastique, notamment un polyamide, ledit stabilisant thermique au cuivre étant un mélange d'iodure de potassium et d'iodure de cuivre (KI/CuI), de préférence dans un rapport de 90/10 à 70/30 et ledit oligo- ou poly-carbodiimide étant choisi parmi un Stabiliser, en particulier le Stabilizer® 9000, un Stabaxol®, notamment un stabaxol® P, en particulier le Stabaxol® P100 ou le Stabaxol® P400, ou un mélange de ceux-ci.

Avantageusement, la présente invention concerne donc l'utilisation ci-dessus définie d'au moins un catalyseur, en proportion en poids de catalyseur comprise de 50 ppm à 5000 ppm, en particulier de 100 à 3000 ppm par rapport au poids total de la composition, d'au moins un stabilisant thermique au cuivre en proportion de 0,05% à 1%, en particulier de 0,05% à 0,3% en poids par rapport au poids total de la composition, et d'au moins un oligo- ou poly-carbodiimide et d'au moins un oligo- ou poly-carbodiimide en proportion de 0,1 à 3%, en particulier de 0,5 à 2%, notamment égale à 1% en poids par rapport au poids total de la composition, avec une matrice comprenant au moins un polymère thermoplastique, notamment un polyamide, ledit catalyseur étant choisi parmi l'acide phosphorique (H₃PO₄), l'acide phosphoreux (H₃PO₃), l'acide hypophosphoreux (H₃PO₂), ou un mélange de ceux-ci, ledit stabilisant thermique au cuivre étant un mélange d'iodure de potassium et d'iodure de cuivre (KI/CuI), de préférence dans un rapport de 90/10 à 70/30 ledit oligo- ou poly-carbodiimide étant choisi parmi un Stabiliser, en particulier le Stabilizer® 9000, un Stabaxol®, notamment un stabaxol® P, en particulier le Stabaxol® P100 ou le Stabaxol® P400, ou un mélange de ceux-ci.

Avantageusement, le catalyseur est choisi parmi l'acide phosphorique (H₃PO₄), l'acide phosphoreux (H₃PO₃) dans une proportion comprise de 100 à 3000 ppm.

### Le polymère thermoplastique

**S'agissant du polymère thermoplastique,** il peut être choisi parmi les polyamides, les mélanges de polyamides.

La nomenclature utilisée pour définir les polyamides est décrite dans la norme ISO 1874-1:1992 "Plastiques -- Matériaux polyamides (PA) pour moulage et extrusion -- Partie 1: Désignation", notamment en page 3 (tableaux 1 et 2) et est bien connue de l'homme du métier.

Le polyamide selon la présente invention peut avoir une structure homopolyamide ou copolyamide.

Par homopolyamide, au sens de la présente invention, on entend un polyamide, qui n'est constitué que de la répétition d'une unique unité.

Par copolyamide, au sens de la présente invention, on entend un polyamide, qui est constitué de la répétition d'au moins deux unités de structure chimique différente. Ce copolyamide peut présenter une structure aléatoire, alternée ou à blocs.

Le polyamide selon la présente invention peut comprendre une ou plusieurs unités de structure choisie parmi les amino-acides, les lactames et les unités (diamine).(diacide).

Lorsque le polyamide comporte un aminoacide dans sa structure, il peut être choisi parmi l'acide 9-aminononanoïque (A=9), l'acide 10-aminodécanoïque (A=10), l'acide 10-aminoundécanoïque (A=11), l'acide 12-aminododécanoïque (A=12) et l'acide 11-aminoundécanoïque (A=11) ainsi que ses dérivés, notamment l'acide N-heptyl-11-aminoundécanoïque, A désignant le nombre d'atomes de carbone dans le motif.

Lorsque le polyamide comporte un lactame, il peut être choisi parmi la pyrrolidinone, la 2-pipéridinone, le caprolactame, l'énantholactame, le caprylolactame, le pelargolactame, le décanolactame, l'undecanolactame, et le lauryllactame (A=12).

Lorsque le polyamide comporte est un motif répondant à la formule (diamine en Ca).(diacide en Cb) Ca et Cb désignant le nombre d'atomes de carbone respectivement dans la diamine et le diacide, le motif (diamine en Ca) est choisi parmi les diamines aliphatiques, linéaires ou ramifiés, les diamines cycloaliphatiques et les diamines alkylaromatiques.

Lorsque la diamine est aliphatique et linéaire, de formule H₂N-(CH₂)ₐ-NH₂, le monomère (diamine en Ca) est préférentiellement choisi parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tetradécanediamine (a=14), l'hexadécanediamine (a=16), l'octadécanediamine (a=18), l'octadécènediamine (a=18), l'eicosanediamine (a=20), la docosanediamine (a=22) et les diamines obtenues à partir d'acides gras.

Lorsque la diamine est aliphatique et ramifiée, elle peut comporter un ou plusieurs substituants méthyle ou éthyle sur la chaîne principale. Par exemple, le monomère (diamine en Ca) peut avantageusement être choisi parmi la 2,2,4-trimethyl-1,6-hexanediamine, la 2,4,4-trimethyl-1,6-hexanediamine, le 1,3-diaminopentane, la 2-methyl-1,5-pentanediamine, la 2-methyl-1,8-octanediamine.

Lorsque le monomère (diamine en Ca) est cycloaliphatique, il est choisi parmi la bis(3,5-dialkyl-4-aminocyclohexyl)methane, la bis(3,5-dialkyl-4-aminocyclohexyl)ethane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-methane (PACM) et l'isopropylidenedi(cyclohexylamine) (PACP), l'isophoronediamine (a=10), la pipérazine (a=4), l'amino-éthylpipérazine. Il peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque le monomère (diamine en Ca) est alkylaromatique, il est choisi parmi la 1,3-xylylène diamine et la 1,4-xylylène diamine.
Le motif (diacide en Cb) est choisi parmi les diacides aliphatiques, linéaires ou ramifiés, les diacides cycloaliphatiques et les diacides aromatiques.

Lorsque le monomère (diacide en Cb) est aliphatique et linéaire, il est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanedioïque (b=18), l'acide octadécènedioïque (b=18), l'acide eicosanedioïque (b=20), l'acide docosanedioïque (b=22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane.
Lorsque le diacide est aromatique, il est choisi parmi l'acide téréphtalique (noté T), isophtalique (noté I) et les diacides naphtaléniques.

Avantageusement, le polymère thermoplastique est un polyamide choisi parmi un polyamide aliphatique, un polyamide cycloaliphatique, un polyamide aromatique ou un mélange de ceux-ci.

Avantageusement, le polyamide présente une Tf comprise de 160°C à 290°C déterminée selon la norme ISO 11357-3 (2013).

Avantageusement, la proportion de polyamide est comprise de 95,5 à 99,845%.

De préférence, le polyamide utile selon l'invention est choisi parmi PA 6, PA 11, PA12, PA 6.10, PA 6.6, PA 6.12, PA 10.10, PA 10.12, PA 11/10.T, PA 11/6.T, 12/10.T, 6.10/10.T, 6.12/10.T, 10.10/10.T, 10.12/10.T, 11/6.T/10.T, 12.12/10.T, 12/6.10/10.T, 12/6.12/10.T, 12/10.10/10.T, 12/10.12/10.T et 12/12.12/10.T.

Avantageusement, le polyamide est choisi parmi : le PA11, le PA12, le PA 11/10.T, le PA 10.10, le PA 10.12 et les copolyamides 11/12 ayant soit plus de 90 % de motifs 11 soit plus de 90 % de motifs 12, préférentiellement parmi le PA 11, le PA 12, le PA 11/10.T, le PA 10.10 et le PA 10.12.

### La polyoléfine

Avantageusement, le polymère thermoplastique, notamment le polyamide peut contenir au moins une polyoléfine.

La polyoléfine peut être fonctionnalisée ou non fonctionnalisée ou être un mélange d'au moins une fonctionnalisée et/ou d'au moins une non fonctionnalisée. Pour simplifier on a décrit plus loin des polyoléfines fonctionnalisées (B1) et des polyoléfines non fonctionnalisées (B2).

La polyoléfine fonctionnalisée (B1) peut être choisie parmi les (co)polymères suivants, greffés avec anhydride maléique, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères .
- des polyoléfines maléisées telles que les TAFMER® MH5020 , TAFMER® 610MP, TAFMER® MD715, Orevac® IM800, Exxelor® VA 1801 et 1803 et Fusabond.
Les TAFMER® sont comercialisé par la société Mitsui Chemicals, les Orevac® par la Demanderesse, les Exxelor par la société Exxon Mobil chemicals.

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique.

A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :
- les copolymères éthylène/(méth)acrylate d'alkyle / acide (méth)acrylique ou anhydride maléique;
- les copolymères éthylène/acétate de vinyle/anhydride maléique;
- les copolymères éthylène/acétate de vinyle ou (méth)acrylate d'alkyle / acide (méth)acrylique ou anhydride maléique.

Le terme "(méth)acrylate d'alkyle" dans (B1) ou (B2) désigne les méthacrylates et les acrylates d'alkyle en C1 à C12, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238-13.

Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique tel que le propylène, le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions acide carboxylique ou anhydride d'acide carboxylique. A titre d'exemples de tels polymères, on peut citer les polymères de l'éthylène et d'acrylate d'alkyle comme les Lucalen®, les ter polymères de l'éthylène, d'acrylate d'alkyle et d'anhydride maléique comme les Lotader® de la Demanderesse ou des polyoléfines greffées par de l'anhydride maléique comme les Orevac® de la Demanderesse, ou des ter polymères d'éthylène, d'octène et d'anhydride maléique nommé Fusabond® 493 de Dupont, ainsi que des ter polymères de l'éthylène, d'acrylate d'alkyle et d'acide (meth) acrylique.

### Les additifs

Le polymère thermoplastique, notamment le polyamide peut contenir au moins un additif usuel tel que des stabilisants thermiques, des fibres de verres, des fibres de carbone, un ignifugeant, du talc, un agent nucléant, un plastifiant, un colorant, un agent fluoré un lubrifiant, un stéarate tels que le stéarate de zinc ou le stéarate de calcium ou stéarate de magnésium, ainsi qu'un autre polyamide, catalysé ou non, différent de celui utilisé ci-dessus.

Il faut noter que ledit stabilisant thermique est différent du stabilisant thermique au cuivre décrit ci-dessus et ne contient par conséquent pas de cuivre.

Le stabilisant thermique peut être un stabilisant organique ou plus généralement une combinaison de stabilisants organiques, tel un antioxydant primaire de type phénol (par exemple du type de celle de l'Irganox® 245 ou 1098 ou 1010 de la société BASF), un antioxydant secondaire de type phosphite et voire éventuellement d'autres stabilisants comme un HALS, ce qui signifie Hindered Amine Light Stabiliser ou stabilisant lumière de type amine encombrée (par exemple le Tinuvin® 770 de la société BASF), un anti-UV (par exemple le Tinuvin® 312 de la société BASF), un stabilisant phénolique ou à base de phosphore. On peut également utiliser des antioxydants de type amine tel le Naugard® 445 (4,4'-Bis(α,α-dimethylbenzyl)diphénylamine) de la société Crompton, la Flexamine® de la société Addivant ou encore des stabilisants polyfonctionnels tel le Nylostab® S-EED de la société Clariant.

Avantageusement, la présente invention concerne l'une des utilisations ci-dessus définies dans laquelle au moins une polyoléfine et/ou au moins un additif sont optionnellement présents, en particulier jusqu'à 30% chacun en poids par rapport au poids total de la composition.

Avantageusement, la présente invention concerne l'une des utilisations ci-dessus définies dans laquelle une polyoléfine est également présente, en particulier de 1 à 15% en poids par rapport au poids total de la composition. Avantageusement, la polyoléfine est choisie parmi un EPR maléisé, notamment l'EXXELOR® VA 1801 et l'EXXELOR® VA1803 commercialisés par la société ExxonMobil, un Fusabond®, en particulier le Fusabond® 493 de la société DuPont, et le TAFMER® MH5020, le TAFMER® 610MP et le TAFMER® MD715 de la société MitsuiChemicals.

Avantageusement, la présente invention concerne l'une des utilisations ci-dessus définies dans laquelle au moins un additif est optionnellement présent, en particulier jusqu'à 30%.

Avantageusement, la présente invention concerne l'une des utilisations ci-dessus définies dans laquelle un additif est également présent, en particulier de 0,1 à 1% en poids par rapport au poids total de la composition.

Avantageusement, l'additif est un stabilisant thermique.

Avantageusement, la présente invention concerne l'une des utilisations ci-dessus définies dans laquelle une polyoléfine est présente, en particulier de 1 à 15% en poids par rapport au poids total de la composition et au moins un additif est également présent en particulier de 0,1 à 30%, en particulier de 0,1 à 20%, notamment de 0,1 à 10% en poids par rapport au poids total de la composition.

Avantageusement, la présente invention concerne l'une des utilisations ci-dessus définies dans laquelle une polyoléfine est présente, en particulier de 1 à 15% en poids par rapport au poids total de la composition et un additif est également présent en particulier de 0,1 à 1% en poids par rapport au poids total de la composition.

Avantageusement, la polyoléfine est choisie parmi un EPR maléisé, notamment l'EPR 1801 et un Fusabond®, en particulier le Fusabond® 493 et l'additif est un stabilisant thermique.

### Les plastifiants

S'agissant du plastifiant il est choisi parmi les dérivés de benzène sulfonamide, tels que le n-butyl benzène sulfonamide (BBSA) ou le N-(2-hydroxypropyl)benzènesulfonamide (HP-BSA) de la société Proviron, l'éthyl toluène sulfonamide ou le N-cyclohexyl toluène sulfonamide de la société Sigma-Aldrich; les esters d'acides hydroxy-benzoïques, tels que le parahydroxybenzoate d'éthyl-2 hexyle (EHPD) de la société Ueno fine Chemicals et le parahydroxybenzoate de décyl-2 hexyle (HD-PB) de la société KAO; les esters ou éthers du tétrahydrofurfuryl alcool, comme l'oligoéthylèneoxytétrahydrofurfurylalcool ; et les esters de l'acide citrique ou de l'acide hydroxy-malonique, tels que l'oligoéthylèneoxy malonate. Un plastifiant particulièrement préféré est le n-butyl benzène sulfonamide (BBSA). On ne sortirait pas du cadre de l'invention en utilisant un mélange de plastifiants. Le plastifiant peut être introduit dans le polyamide pendant la polycondensation ou ultérieurement. La proportion de plastifiant peut être de 0 à 15 % en poids.

Avantageusement, le plastifiant utilisé est un dérivé de benzène sulfonamide, tels que le n-butyl benzène sulfonamide (BBSA).

Avantageusement, la présente invention concerne l'une des utilisations ci-dessus définies dans laquelle un plastifiant est également présent, en particulier de 1 à 10% en poids par rapport au poids total de la composition.

Avantageusement, la présente invention concerne l'une des utilisations ci-dessus définies dans laquelle une polyoléfine est présente, en particulier de 1 à 15% en poids par rapport au poids total de la composition, au moins un additif est également présent en particulier de 1 à 10% en poids par rapport au poids total de la composition ainsi qu'un plastifiant en particulier de 1 à 10% en poids par rapport au poids total de la composition.

Avantageusement, la présente invention concerne l'une des utilisations ci-dessus définies dans laquelle une polyoléfine est présente, en particulier de 1 à 15% en poids par rapport au poids total de la composition, un additif est également présent en particulier de 0,1 à 1% en poids par rapport au poids total de la composition ainsi qu'un plastifiant en particulier de 1 à 10% en poids par rapport au poids total de la composition.

Avantageusement, la polyoléfine est choisie parmi un EPR maléisé, notamment l'EPR® 1801 et un Fusabond®, en particulier le Fusabond® 493 et l'additif est un stabilisant thermique, et le plastifiant est un dérivé de benzène sulfonamide, tel que le n-butyl benzène sulfonamide (BBSA).

### COMPOSITIONS

Selon un autre aspect, la présente invention concerne une composition présentant une viscosité à l'état fondu d'environ 13000 à environ 23000 Pa.s, telle que déterminée par rhéologie oscillatoire à 270°C, à 10 rad/sec sous balayage d'azote avec 5% de déformation et un cisaillement de 10 sec-1 entre deux plans parallèles de 25 mm de diamètre et stable à la transformation, c'est-à-dire que la viscosité à l'état fondu n'évolue pas de plus de 70% en fonction du temps, et précisément entre 1 minute (temps nécessaire pour fondre le produit) et au moins 30 minutes, en particulier entre 1 minute et 30 minutes, et stable à la transformation, c'est-à-dire que la viscosité à l'état fondu n'évolue pas de plus de 70% en fonction du temps, et précisément entre 1 minute (temps nécessaire pour fondre le produit) et au moins 30 minutes, en particulier entre 1 minute et 30 minutes, telle que définie ci-dessus, caractérisée en ce qu'elle comprend par rapport au poids total de la composition:
a. 20,5 à 99,845% en poids d'au moins un polyamide tel que défini ci-dessus ;
b. 0,005 à 0,5% en poids d'au moins un catalyseur ;
c. 0,05 à 1% en poids d'au moins un stabilisant thermique au cuivre ;
d. 0,1 à 3% en poids d'au moins un oligo- ou poly-carbodiimide ;
e. 0 à 15% d'au moins un plastifiant ;
f. 0 à 30% d'au moins une polyoléfine ;
g. 0 à 30% d'au moins un additif.

Selon cet aspect, mise à part la proportion de polyamide présent dans la composition qui est limitée de 20,5 à 99,845% en poids par rapport au poids total de la composition , le catalyseur, le stabilisant thermique au cuivre, l'oligo- ou poly-carbodiimide, le plastifiant, la polyoléfine et l'additif sont tels que définis ci-dessus pour l'utilisation, et les différentes combinaisons et variantes relatives aux proportions de ces différents constituants s'appliquent donc à ces compositions en tant que telles. Ladite composition présente toutes les propriétés ci-dessus définies, à savoir présentant une bonne viscosité à l'état fondu et stable à la transformation, en particulier à l'extrusion, entre 1 minute et au moins 30 minutes, en particulier entre 1 minute et 30 minutes, et en particulier ladite viscosité à l'état fondu de la dite composition est sensiblement constante entre 1 minute et au moins 5 minutes, en particulier entre 1 minute et 5 minutes. Ladite composition présente de plus une tenue à la thermo-oxydation. Elle présente notamment une viscosité à l'état fondu d'environ 13000 à environ 23000 Pa.s, telle que déterminé par rhéologie oscillatoire à 270°C (plan plan), durant au moins 30 minutes, notamment durant 30 minutes.

Avantageusement, ladite composition présente une résistance à l'hydrolyse.

L'expression « résistance à l'hydrolyse » signifie que la demi-vie des tubes (en heures) qui correspond au temps au bout duquel les tuyaux testés après exposition à l'eau chaude ou un mélange eau et éthylène glycol à 140°C cassent, avec un test d'allongement à la rupture selon la norme ISO 527-2 (2012), est d'au moins 40 jours. En d'autre termes, il s'agit du temps pour avoir 50% absolu d'allongement à la rupture des tuyaux.

Avantageusement ladite composition présente une tenue à la thermo-oxydation et une résistance à l'hydrolyse.

Ainsi, la composition de l'invention, qu'elle comprenne ou non des polyoléfines et/ou des plastifiants et/ou des additifs présente une viscosité à l'état fondu de 13000 à 23000 Pa.s durant au moins 30 minutes et ce quelle que soit la viscosité inhérente de la composition dépourvue desdits polyoléfines, plastifiants et additifs.

Les compositions de l'invention permettent de faciliter l'extrusion de gros tubes, notamment pour le gaz pipe ou l'exploitation de pétrole sous la mer.

De plus, les compositions de l'invention sont particulièrement stables à la tenue thermique et à l'hydrolyse.

Avantageusement, le polyamide est choisi parmi le PA11, le PA12, le PA 11/10.T, le PA 10.10, le PA 10.12 et les copolyamides 11/12 ayant soit plus de 90 % de motifs 11 soit plus de 90 % de motifs 12, en particulier parmi le PA11, le PA12, le PA 11/10.T, le PA 10.10 et le PA 10.12, le catalyseur est choisi parmi l'acide phosphorique (H₃PO₄), l'acide phosphoreux (H₃PO₃), l'acide hypophosphoreux (H₃PO₂), ou un mélange de ceux-ci, le stabilisant thermique au cuivre est un mélange d'iodure de potassium et d'iodure de cuivre, l'oligo- ou poly-carbodiimide est choisi parmi un Stabiliser, en particulier le Stabilizer® 9000, un Stabaxol®, notamment un Stabaxol® P , en particulier le Stabaxol® P100 ou le Stabaxol® P400, ou un mélange de ceux-ci.

Avantageusement, la composition comprend :
a. 95,5 à 99,845% en poids d'au moins un polyamide tel que défini ci-dessus ;
b. 0,005 à 0,5% en poids d'au moins un catalyseur ;
c. 0,05 à 1% en poids d'au moins un stabilisant thermique au cuivre ;
d. 0,1 à 3% en poids d'au moins un oligo- ou poly-carbodiimide.

Plus avantageusement, la dite composition comprend ou est constituée :
a. 85,5 à 98,845% en poids d'au moins un polyamide tel que défini ci-dessus ;
b. 0,005 à 0,5% en poids d'au moins un catalyseur ;
c. 0,05 à 1% en poids d'au moins un stabilisant thermique au cuivre ;
d. 0,1 à 3% en poids d'au moins un oligo- ou poly-carbodiimide ;
e. de 1 à 10% en poids d'au moins un additif.
Avantageusement, les additifs de ladite composition a., b., c., d., et e. ci-dessus définie sont un mélange d'un colorant sous forme de mélange maître, d'un stabilisant UV, d'un agent nucléant et de stabilisants thermiques.

Cette composition peut être sous forme de granulé ou de poudre et est adaptée pour de nombreuses applications.
Avantageusement, la composition comprend ou est constituée de :
a. 80,5 à 98,845% en poids d'au moins un polyamide tel que défini ci-dessus ;
b. 0,005 à 0,5% en poids d'au moins un catalyseur ;
c. 0,05 à 1% en poids d'au moins un stabilisant thermique au cuivre ;
d. 0,1 à 3% en poids d'au moins un oligo- ou poly-carbodiimide ;
e. 1 à 15% d'au moins un plastifiant.

Plus avantageusement, la dite composition comprend ou est constituée :
a. 70,5 à 97,845% en poids d'au moins un polyamide tel que défini ci-dessus ;
b. 0,005 à 0,5% en poids d'au moins un catalyseur ;
c. 0,05 à 1% en poids d'au moins un stabilisant thermique au cuivre ;
d. 0,1 à 3% en poids d'au moins un oligo- ou poly-carbodiimide ;
e. 1 à 15% d'au moins un plastifiant.
f. 1 à 10% en poids d'au moins un additif.

Avantageusement, les additifs de ladite composition a., b., c., d., e. et f. ci-dessus définie sont un mélange d'un colorant sous forme de mélange maître, d'un stabilisant UV, d'un agent nucléant et de stabilisants thermiques.

Cette composition peut être sous forme de granulé ou de poudre et est plus particulièrement adaptée au moulage de pièces, notamment pour le sport.

Avantageusement, la composition est constituée de :
a. 55,5 à 98,745% en poids d'au moins un polyamide tel que défini ci-dessus ;
b. 0,005 à 0,5% en poids d'au moins un catalyseur ;
c. 0,05 à 1% en poids d'au moins un stabilisant thermique au cuivre ;
d. 0,1 à 3% en poids d'au moins un oligo- ou poly-carbodiimide ;
e. 1 à 30% d'au moins une polyoléfine ;
f. 0,1 à 10% d'au moins un additif.

Avantageusement, les additifs de ladite composition a., b., c., d., e. et f. ci-dessus définie sont un mélange d'un colorant sous forme de mélange maître, d'un stabilisant UV, d'un agent nucléant et de stabilisants thermiques.

Avantageusement, la composition est constituée de :
a. 64,5 à 98,745% en poids d'au moins un polyamide tel que défini ci-dessus ;
b. 0,005 à 0,5% en poids d'au moins un catalyseur ;
c. 0,05 à 1% en poids d'au moins un stabilisant thermique au cuivre ;
d. 0,1 à 3% en poids d'au moins un oligo- ou poly-carbodiimide ;
e. 1 à 30% d'au moins une polyoléfine ;
f. 0,1 à 1% d'au moins un additif.

Ces deux dernières compositions peuvent être sous forme de granulé ou de poudre et sont plus particulièrement adaptées à l'extrusion de gaz pipe.

Avantageusement, la composition est constituée de :
a. 40,50 à 97,745% en poids d'au moins un polyamide tel que défini dans la revendication 12 à 14 ;
b. 0,005 à 0,5% en poids d'au moins un catalyseur ;
c. 0,05 à 1% en poids d'au moins un stabilisant thermique au cuivre ;
d. 0,1 à 3% en poids d'au moins un oligo- ou poly-carbodiimide ;
e. 1 à 15% d'au moins plastifiant ;
f. 1 à 30% d'au moins une polyoléfine ;
g. 0,1 à 10% d'au moins un additif.

Avantageusement, les additifs de ladite composition a., b., c., d., e., f. et g. ci-dessus définie sont un mélange d'un colorant sous forme de mélange maître, d'un stabilisant UV, d'un agent nucléant et de stabilisants thermiques.

Avantageusement, la composition est constituée de :
a. 49,50 à 97,745% en poids d'au moins un polyamide tel que défini dans la revendication 12 à 14 ;
b. 0,005 à 0,5% en poids d'au moins un catalyseur ;
c. 0,05 à 1% en poids d'au moins un stabilisant thermique au cuivre ;
d. 0,1 à 3% en poids d'au moins un oligo- ou poly-carbodiimide ;
e. 1 à 15% d'au moins plastifiant ;
f. 1 à 30% d'au moins une polyoléfine ;
g. 0,1 à 1% d'au moins un additif.

Ces deux dernières compositions peuvent être sous forme de granulé ou de poudre et sont plus particulièrement adaptées à l'extrusion de tuyaux pour l'exploitation des gisements de pétrole sous la mer ou de tuyau pour une utilisation sous capot moteur ou au moulage de pièce notamment pour le sport.

Avantageusement, le polyamide des compositions de l'invention est choisi parmi un polyamide aliphatique, un polyamide cycloaliphatique, un polyamide aromatique ou un mélange de ceux-ci.

### UTILISATION DE LA COMPOSITION

Selon un autre aspect, la présente invention concerne l'utilisation d'une composition telle que définie ci-dessus, pour la constitution d'une structure, telle que :
un tuyau flexible destiné au transport du gaz, à l'exploitation des gisements de pétrole sous la mer,
un tuyau flexible pour l'automobile, notamment pour le transport de carburant (essence, diesel, biodiésel ou éthanol), pour la réfrigération, pour l'air conditionné, pour des conduites réalisées notamment en extrusion soufflage pour l'alimentation en air,
un corps creux, un moulage ou un article de sport.

Selon cet aspect, tout comme ci-dessus, le catalyseur, le stabilisant thermique au cuivre, l'oligo- ou poly-carbodiimide, le plastifiant, la polyoléfine et l'additif sont tels que définis ci-dessus pour l'utilisation ou la composition, et les différentes combinaisons et variantes relatives aux proportions de ces différents constituants définies ci-dessus s'appliquent donc à l'utilisation de ces compositions pour la constitution de ladite structure.

Le tuyau flexible destiné au transport du gaz, à l'exploitation des gisements de pétrole sous la mer, présente une bonne tenue à la thermo-oxydation et une résistance à l'hydrolyse et notamment une température de service d'au moins 70°C pendant 20 ans.

Avantageusement, les compositions utilisées pour la constitution d'une structure qui est un tuyau flexible destiné à l'exploitation des gisements de pétrole sous la mer peuvent également être utilisées pour la constitution d'une structure qui est un tuyau flexible pour l'automobile, notamment pour le transport de carburant (essence, diesel, biodiésel ou éthanol), pour la réfrigération, pour l'air conditionné ou pour des conduites réalisées notamment en extrusion soufflage pour l'alimentation en air.

### STRUCTURE

Selon un autre aspect, la présente invention concerne un tuyau flexible destiné au transport du gaz ou à l'exploitation des gisements de pétrole sous la mer, ou pour l'automobile, notamment pour le transport de carburant (essence, diesel, biodiésel ou éthanol), pour la réfrigération, pour l'air conditionné, pour l'alimentation en air tel que défini ci-dessus, comprenant au moins une couche d'une composition telle que définie ci-dessus.

Selon cet aspect, tout comme ci-dessus, le catalyseur, le stabilisant thermique au cuivre, l'oligo- ou poly-carbodiimide, le plastifiant, la polyoléfine et l'additif sont tels que définis ci-dessus pour l'utilisation ou la composition, et les différentes combinaisons et variantes relatives aux proportions de ces différents constituants définies ci-dessus s'appliquent donc aux tuyaux en tant que tels.

Avantageusement, le tuyau flexible ci-dessus défini est caractérisé en ce que ladite couche est la couche en contact avec le fluide et la composition est telle que définie ci-dessus pour la constitution d'une structure qui est un tuyau flexible destiné au transport du gaz.

Avantageusement, ledit tuyau destiné au transport du gaz est un tuyau monocouche.

Avantageusement, ledit tuyau flexible destiné au transport du gaz est caractérisé en ce qu'il peut comprendre en outre au moins une autre couche, notamment en thermoplastique.

Ledit tuyau peut comprendre de plus un renfort, en particulier un renfort choisi parmi un renfort métallique, en fibre de verre, en fibre de carbone et en fibre d'aramide. Avantageusement, le tuyau flexible de l'invention ci-dessus défini est caractérisé en ce que la dite couche est la couche interne d'un tuyau flexible destiné à l'exploitation des gisements de pétrole sous la mer, la composition étant telle que définie ci-dessus, pour la constitution d'une structure qui est un tuyau flexible destiné à l'exploitation des gisements de pétrole sous la mer.

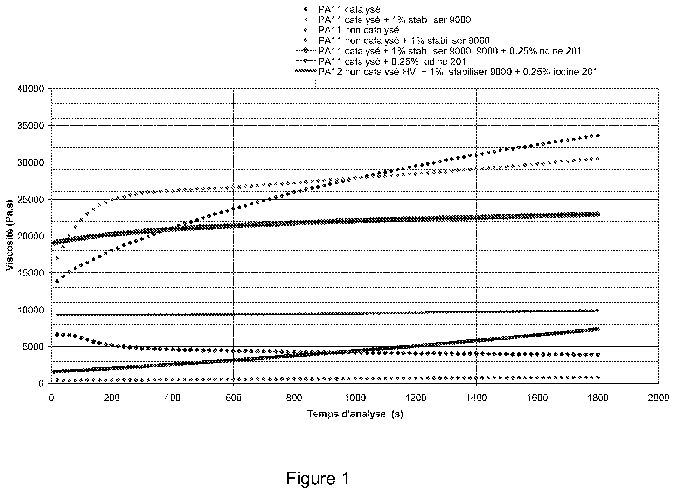

La structure de tuyaux destinés à l'exploitation des gisements de pétrole sous la mer est notamment décrite dans la demande internationale WO 2013/128097 et correspond en particulier au tuyau comprenant les couches 2 à 8 de la figure 1 de ladite demande internationale WO 2013/128097.

Ladite couche interne correspond dans ce cas à la couche 3 du tuyau de la demande internationale WO 2013/128097, c'est-à-dire la gaine de pression ou gaine d'étanchéité.

Avantageusement, le tuyau flexible ci-dessus défini est caractérisé en ce que la dite couche est la couche externe d'un tuyau flexible destiné à l'exploitation des gisements de pétrole sous la mer, la composition étant telle que définie ci-dessus, pour la constitution d'une structure qui est un tuyau flexible destiné à l'exploitation des gisements de pétrole sous la mer.

Ladite couche externe correspond dans ce cas à la couche (8) du tuyau de la demande internationale WO 2013/128097.

Avantageusement, le tuyau flexible de l'invention destiné à l'exploitation des gisements de pétrole sous la mer comprend une couche interne (3) ci-dessus définie et une couche externe (8) ci-dessus définie, lesdites couches internes et externes étant constituées de la même composition de l'invention ou chacune d'une composition différente de l'invention.

On ne sortirait pas du cadre de l'invention si l'une des couches (3) ou (8) était constituée d'un thermoplastique différent de celui de l'invention telles que décrites dans WO 2013/128097, notamment un autre polyamide.

Avantageusement, le tuyau flexible de l'invention destiné à l'exploitation des gisements de pétrole sous la mer est constitué des couches 2/3/4/6/7/8 décrites dans WO 2013/128097, les couches 3 et 8 étant telles que définies ci-dessus, et la couche 2 correspondant à la carcasse interne en contact avec le pétrole, la couche 4 correspondant à une gaine intermédiaire en polyéthylène ou polypropylène, les couches 6 et 7 correspondant à des couches d'armure de traction.

Avantageusement, le tuyau flexible de l'invention destiné à l'exploitation des gisements de pétrole sous la mer est constitué des couches 2/3/4/5/6/7/8 décrites dans WO 2013/128097, les couches 2 à 4 et 6 à 8 étant telles que définies ci-dessus et la couche (5) correspondant à la voute de pression.

Avantageusement, le tuyau flexible de l'invention destiné à l'exploitation des gisements de pétrole sous la mer est constitué des couches 30/40/50/80/90 décrites dans la demande US 2009/0308478.

Ladite couche interne ci-dessus définie constituée de compositions de l'invention peut correspondre à la couche interne 30.

Ladite couche externe ci-dessus définie constituée de compositions de l'invention peut correspondre à la couche externe 90 de la dite demande US 2009/0308478.

Les autres couches sont telles que définies dans la demande US 2009/0308478.

Avantageusement, le tuyau flexible tel que défini ci-dessus pour l'automobile, notamment pour le transport d'essence, pour la réfrigération, pour l'air conditionné, pour des conduites réalisées notamment en extrusion soufflage pour l'alimentation en air, est caractérisé en ce qu'il comprend au moins une couche constituée d'une composition telle que définie pour la constitution d'une structure qui est un tuyau flexible destiné à l'exploitation des gisements de pétrole sous la mer.

Le tuyau pour l'air conditionné est notamment adapté pour le transport de fluide frigorigène et notamment du gaz R-1234yf ou 1234-ze cis ou trans), utilisé notamment dans le domaine de la climatisation automobile ou de la climatisation stationnaire.

La description va maintenant être illustrée à l'aide des exemples suivants qui ne sont cependant pas limitatifs de l'invention.

### Description des figures

La **figure 1** présente la rhéologie oscillatoire à 270°C (fréquence : 10 rad/s, 5% de déformation, cisaillement 10s⁻¹) de 0 à 30 minutes.

Le graphe présente en abscisse le temps d'analyse en secondes et en ordonnées la viscosité en Pa.s.

A 1800 seconde, de haut en bas :
PA 11 catalysé (600 ppm H₃PO₄).
PA 11 catalysé (600 ppm H₃PO₄) + 1% stabiliser 9000.
PA 11 catalysé (600 ppm H₃PO₄) + 1% stabiliser 9000 + 0,25% iodine 201 : courbe de l'invention, la seule ayant une ciscosité comprise entre 13000 et 23000 Pa.s.
PA 12 non catalysé + 1% stabiliser 9000 + 0,25% iodine 201.
PA 11 non catalysé + 1% stabiliser 9000.
PA 11 catalysé (600 ppm H₃PO₄) + 0,25% iodine 201.
PA 11 non catalysé.

### Exemples

### Produits utilisés

Les polyamides utilisés sont le PA11 (BESNO commercialisé par la société Arkema), PA12 (AESNO commercialisé par la société Arkema), PA10.10 (commercialisé par la société Arkema : Hiprolon 200) et PA10.12 (commercialisé par la société Arkema : Hiprolon 400)

Le stabilisant thermique à base de cuivre est du PolyAdd P201 de la société Polyad Services (iodine 201).

Le carbodiimide utilisé est le Stabiliser® 9000 (Poly-(1,3,5-triisopropylphenylene- 2,4-carbodiimide) commercialisé par la société Raschig ou le TCC commercialisé par la société Teijin.

Le catalyseur utilisé est H₃PO₃ ou H₃PO₄.

ANOX® NDB TL89 : stabilisant organique type phénol phosphite commercialisé par la société Chemtura.

BBSA : n-butyl benzène sulfonamide commercialisé par la société PROVIRON EPR 1801 : polyoléfine (copolymère d'éthylène fonctionnalisé anhydride maléique) commercialisé par la société Exxon.

Fusabond® 493 : polyoléfine (copolymère d'éthylène fonctionnalisé anhydride) commercialisé par la société DuPont.

### Exemple 1 : détermination de la viscosité à l'état fondu de polyamides de l'inventions avec ou sans catalyseur en présence ou non d'un stabilisant au cuivre et/ou d'un carbodiimide

Les essais (mélange de PA avec ou sans catalyseur auxquels sont ajoutés ou non un stabilisant au cuivre et/ou un carbodiimide) sont réalisés sur micro-compoundeuse Xplore MC15 équipée des vis 111 et 123 (vis profil 2).

Le profil de température plat à 270°C est programmé.

Les divers mélanges sont réalisés avec une vitesse de vis de 100 rpm et un temps de recirculation de 25 minutes, auxquelles il faut ajouter le temps d'alimentation machine soit entre 1'30 et 2'.

Les essais sont réalisés sous balayage d'azote (0,5bars).

On mesure la force normale en N. Elle représente l'évolution de la viscosité à l'état fondu.

La viscosité à T0 et son évolution à T + 30 minutes sont déterminées par rhéologie oscillatoire en plan plan.

Plan plan : 30 mn à 270°c 10 rad/sec 5% de déformation selon les conditions opératoires suivantes
Appareil : PHYSICA MCR301
Géométrie : plans parallèles de 25mm de diamètre
Températures : 270°C
Fréquence : 10rad.s-1
Durée : 30 minutes
Atmosphère : Balayage d'azote.
Cisaillement de 10 s⁻¹

### Exemple 1.1 : PA 11, PA 12 et PA 10.10 sans catalyseur : avec ou sans stabilisant thermique à base de cuivre et/ou carbodiimide

Les pourcentages sont indiqués en poids.

La viscosité à l'état fondu est déterminée à T0 et après 30 minutes.

La viscosité inhérente est déterminée dans le m-crésol selon la norme ISO 307-2007.

La méthode est bien connue de l'homme du métier. On suit la norme ISO 307-2007 mais en changeant le solvant (utilisation du m-crésol à la place de l'acide sulfurique et la température étant de 20°C).

| | **PA11** | **PA11** | **PA11** |
|---|---|---|---|
| **Viscosité inhérente** | 1,45 | 1,45 | 1,45 |
| **Catalyseur** | - | - | - |
| **Stabilisant thermique au Cuivre** | - | 0,25 % iodine 201 | 0.25% iodine 201 |
| **Carbodiimide** | - | - | 1% stabiliser 9000 |
| **plan plan 270°c 10rad/sec (viscosité à l'état fondu)** | Pa.s | Pa.s | Pa.s |
| **T0** | 384 | Pas de REV | 5350 |
| **Après 30 mn Remarque** | 807 Trop fluide | Pas de REV Trop fluide | 5278 |
| | | | Trop fluide |

« Pas de REV » signifie qu'il n'y a pas de remontée en viscosité.

Un PA11, sans catalyseur, de viscosité inhérente relativement élevée (1,45, grade extrusion) n'est pas assez visqueux que ce soit avec stabilisant au cuivre seul ou stabilisant au cuivre et carbodiimide.

L'ajout de 0.25% de iodine 201 n'augmente pas la viscosité.

L'ajout de carbodiimide procure une élévation de viscosité à l'état fondu qui cependant n'est pas suffisante pour la transformation du produit.

| | **PA12** | **PA12** |
|---|---|---|
| **Viscosité inhérente** | 1,60 | 1,60 |
| **catalyseur** | - | - |
| **Stabilisant thermique au cuivre** | - | 0.25% iodine 201 |
| **Carbodiimide** | - | 1% stabiliser 9000 |
| **plan plan 270°c 10rad/sec (viscosité à l'état fondu)** | Pa.s | Pa.s |
| **T0** | 7152 | 9000 |
| **Après 30 mn Remarque** | 7800 Trop fluide | 10000 |
| | | Trop fluide |

Un PA12 (AESNO de la société ARKEMA sans limitateur de chaine), sans catalyseur, de viscosité inhérente élevée (1,6) n'est pas assez visqueux même avec ajout de stabilisant au cuivre et de carbodiimide.

L'ajout de carbodiimide procure une élévation de viscosité à l'état fondu qui cependant n'est pas suffisante pour la transformation du produit.

| | **PA10.10** | **PA10.10** | **PA10.10** |
|---|---|---|---|
| **Viscosité inhérente** | 1,35 | 1,35 | 1,35 |
| **catalyseur** | - | - | - |
| **Stabilisant thermique au cuivre** | - | 0.25 % iodine 201 | 0.25% iodine 201 |
| **Carbodiimide** | - | - | 1% stabiliser 9000 |
| **plan plan 270°c 10rad/sec (viscosité à l'état fondu)** | Pa.s | Pa.s | Pa.s |
| **T0** | 1650 | Pas de REV | 7685 |
| **Après 30 mn Remarque** | 2648 Trop fluide | Pas de REV Trop fluide | 9635 |
| | | | Trop fluide |

Un PA10.10 de viscosité inhérente moyenne (1,35) est trop fluide que ce soit avec stabilisant au cuivre additionné ou non de carbodiimide.

Par conséquent, le problème de la viscosité inhérente à l'état fondu ne peut être résolu en augmentant la viscosité inhérente de départ.

### Exemple 1.2 : PA 11, PA 10.10 et PA 10.12 avec catalyseur : avec ou sans stabilisant thermique à base de cuivre et/ou carbodiimide

Les pourcentages sont indiqués en poids.

| | **PA11** | **PA11 catalysé** | **PA11 catalysé** |
|---|---|---|---|
| **Viscosité inhérente** | 1,45 | 1,45 | 1,45 |
| **catalyseur** | 600 ppm H₃PO₄ | 600 ppm H₃PO₄ | 600 ppm H₃PO₄ |
| **Stabilisant thermique au cuivre** | - | 0.25 % iodine 201 | 0.25% iodine 201 |
| **Carbodiimide** | - | - | 1% stabiliser 9000 |
| **plan plan 270°c 10rad/sec (viscosité à l'état fondu)** | Pa.s | Pa.s | Pa.s |
| **T0** | 13500 | 1550 | **19000** |
| **Après 30 mn Remarques Evolution après 400 sec Evolution après 30 mn** | 30000 | 7300 | **23000** |
| | Trop évolutif | Trop fluide | **Invention** |
| | 21000 soit + 55% | | **5%** |
| | 148% | | **22%** |

Un PA11 de viscosité inhérente relativement élevée (1,45 ; grade extrusion) est suffisamment visqueux à l'état fondu à T0 (soit une viscosité à l'état fondu supérieure ou égale à 13000 Pa.s) mais trop évolutif puisque la viscosité à l'état fondu est très nettement supérieure à 23000 Pa.s).

L'ajout d'un stabilisant thermique au PA11 catalysé ne permet pas d'améliorer la viscosité, bien au contraire puisque celle-ci chute drastiquement, stoppant même la révolution.

Par contre, l'ajout d'un stabilisant thermique et de carbodiimide, permet non seulement l'obtention d'une viscosité à l'état fondu supérieure ou égale à 13000 Pa.s mais également stable durant au moins 30 minutes.

| | **PA10.10** | **PA10.10** | **PA10.10** |
|---|---|---|---|
| **Viscosité inhérente** | 1,45 | 1,45 | 1,45 |
| **catalyseur** | 2000 ppm H₃PO₄ | 2000 ppm H₃PO₄ | 2000 ppm H₃PO₄ |
| **Stabilisant thermique au cuivre** | - | 0.2 % iodine 201 | 0.2% iodine 201 |
| **Carbodiimide** | - | - | 1% stabiliser 9000 |
| **plan plan 270°c 10rad/sec (viscosité à l'état fondu)** | Pa.s | Pa.s | Pa.s |
| **T0** | 9369 | 10200 | **13357** |
| **Après 30 mn Remarque Evolution après 30 mn** | 12805 | 16400 | **20313** |
| | Trop fluide | Trop fluide | **invention** |
| | | | **52%** |

Un PA10.10 de viscosité inhérente de 1,45 comprenant seulement un catalyseur n'est suffisamment visqueux à l'état fondu à T0 (soit une viscosité à l'état fondu inférieure à 13000 Pa.s).

L'ajout d'un stabilisant thermique ne permet pas d'atteindre une viscosité à l'état fondu suffisante.

Par contre, l'ajout d'un stabilisant thermique et de carbodiimide, permet non seulement l'obtention d'une viscosité à l'état fondu supérieure ou égale à 13000 Pa.s mais également stable durant au moins 30 minutes.

| | **PA10.12** | **PA10.12** | **PA10.12** |
|---|---|---|---|
| **Viscosité inhérente** | 1,4 | 1,4 | 1,4 |
| **catalyseur** | 100 ppm H₃PO₃ | 100 ppm H₃PO₃ | 100 ppm H₃PO₃ |
| **Stabilisant thermique au cuivre** | - | 0,2 % iodine 201 | 0,2% iodine 201 |
| **Carbodiimide** | - | - | 1% stabiliser 9000 |
| **plan plan 270°c 10rad/sec (viscosité à l'état fondu)** | Pa.s | Pa.s | Pa.s |
| **T0** | 6156 | 9000 | **17653** |
| **Après 30 mn Remarque Evolution après 30 mn** | 27558 | 17000 | **19772** |
| | Trop fuide et trop evolutif | Trop fluide et trop evolutif | **Invention** |
| | 347% | 89% | **12%** |

De la même manière, avec un PA10.12 de viscosité inhérente de 1,4 comprenant seulement un catalyseur, la viscosité à l'état fondu à T0 est trop faible (inférieure à 13000 Pa.s).

L'ajout d'un stabilisant thermique ne permet pas d'atteindre une viscosité à l'état fondu suffisante.

Par contre, l'ajout d'un stabilisant thermique et de carbodiimide, permet non seulement l'obtention d'une viscosité à l'état fondu supérieure ou égale à 13000 Pa.s mais également stable durant au moins 30 minutes.

### Exemple 2 : influence de la présence de catalyseur et de la proportion d'un stabilisant au cuivre et/ou de carbodiimide sur les propriétés rhéologiques des polyamides de l'invention.

### Exemple 2.1

Les pourcentages sont indiqués en poids.

Le polyamide utilisé pour tous les essais de cet exemple est le PA 11 de viscosité inhérente 1,45 tel que ci-dessus.

| **Catalyseur (ppm)** | **Stabilisant thermique au cuivre (Iodine 201) % en poids** | **Carbodiimide % en poids** | **Rhéologie** | **Stabilité viscosité** |
|---|---|---|---|---|
| **0** | **0** | **0** | **-** | **++** |
| **0** | **0** | **1** | **-** | **++** |
| **0** | **0** | **1,5** | **+** | **+** |
| **0** | **0** | **2** | **+** | **+** |
| | | | | |
| **600** | **0** | **0** | **+** | **-** |
| **600** | **0** | **1** | **-** | **-** |
| **600** | **0,25** | **0** | **-** | **+** |
| **600** | **0,25** | **1** | **++** | **++** |

Le complément à 100% est dans chaque cas le pourcentage en poids de PA 11.
« - « signifie que la valeur obtenue est insuffisante pour la transformation
« + » signifie que la valeur est limite pour la transformation
« ++ » signifie que la valeur obtenue est bonne pour la transformation

Cet exemple montre que l'aspect le plus important pour la transformation n'est pas la valeur de viscosité inhérente mais la valeur de la viscosité à l'état fondu avec la combinaison catalyseur-stabilisant thermique au cuivre-carbodiimide.

### Exemple 2.2 : Le polyamide utilisé pour tous les essais de cet exemple est le PA 11.

Les pourcentages indiqués sont en poids.

| | **Viscosité inhérente** | **Plan plan à t0** |
|---|---|---|
| **PA 11 + 600 ppm H₃PO₄** | 1.77 | 15000 |
| **PA11 non catalysé + 1% stabiliser® 9000** | 1.80 | 6600 |
| **PA11 non catalysé + 1.5 % stabiliser® 9000** | 2.25 | 12130 |
| **PA 11 + 600 ppm H₃PO₄ + 1% stabiliser® 9000 + 0.25% iodine 201** | 2.30 | 20000 |

Il n'y a pas de corrélation entre la viscosité en solution (viscosité inhérente dans le métacrésol) et la viscosité à l'état fondu. Ceci peut s'expliquer par l'indice de polydispersité représentatif des branchements

### Exemple 3: Evaluation des compositions de l'invention comprenant de plus des polyoléfines et/ou des plastifiants et/ou des additifs : Tenue thermique à 140°C.

Les proportions indiquées sont des pourcentages en poids par rapport au poids total de la composition.

Essai sur Bi vis à 280°c - 300 tr/mn sous vide - 600 mm/hg (werner 40) à 60 kg/h.

La base PA est séchée (<0,1% d'humidité)

| | **Comp. 1** | **Comp. 2** | **Comp. 3** | **Comp. 4** | **Inv. 1** | **Inv. 2** |
|---|---|---|---|---|---|---|
| ANOX NDB TL89 | 1,2 | | | | | |
| BBSA | 6 | 6 | 10 | 6 | 6 | 6 |
| PA 11 + 600 ppm H₃PO₄ Viscosité inhérente 1,45 | 82,8 | | | 83,8 | 82,8 | 83,3 |
| EPR 1801 | 10 | | | 10 | 10 | 10 |
| FUSABOND 493 | | 10 | 6 | | | |
| iodine 201 | | 0,2 | 0,2 | 0,2 | 0,2 | 0,2 |
| PA11 viscosité inhérente 1,45 | | 82,5 | 82,5 | | | |
| STABILISER 9000 | 0 | 1,3 | 1,3 | 0 | 1 | |
| TCC | | | | | | 0,5 |
| | | | | | | |
| Pression tête (bars). | 23 | 35 | 33 | 16,5 | 40 | 40 |
| Couple %. | 71 | 68 | 63 | 63 | 86 | 82 |
| | | | | | | |
| RCG à 260°c 5 mn à 100 sec⁻¹ : en Pa.s | 2819 | 2209 | 1936 | | 3830 | |
| plan plan à 10rad/sec : to à 270°c en Pa.s | 13000 | 10300 | 9800 | 1200 | **14000** | **13000** |
| plan plan à 10 rad/sec : après 30 mn à 270°c en Pa.s | 31800 | 5140 | 2770 | 8000 | 21000 | 19000 |
| | | | | | | |
| Éprouvettes ISO 527-2 1BA 1/2 vie à 140°c | 720h | | | >2000h | **>2000h** | **>2000h** |
| | | | | | | |
| Viscosité inhérente corrigée | 1,72 | 2,22 | 2,49 | 1,50 | 2,31 | 2,2 |

La ½ vie mesurée sur l'allongement à la rupture passe de 30 jours pour la composition comparative 1 (PA 11 + 600 ppm de catalyseur), qui ne comprend pas de stabilisant thermique et de carbodiimide, à 90 jours pour une composition de l'invention comprenant à la fois un catalyseur (même proportion que le comparatif 1), un stabilisant au cuivre et un carbodiimide.

La composition selon l'invention est plus visqueuse que le comparatif 4, la seule différence étant la présence de carbodiimide dans la formulation selon l'invention (à t0 et t = 30min).

Par ailleurs, le comparatif 1 présente une viscosité à l'état fondu qui à priori semble bonne (t0 = 13000) mais qui évolue beaucoup trop jusqu'à t=30 min ne rendant ainsi difficile sa transformation contrairement à la composition selon l'invention.

D'autre part, les comparatifs 2 et 3 qui ne comprennent pas de catalyseur mais comprennent un carbodiimide en proportion supérieure à celle de la composition de l'invention (1,3% au lieu de 1%) possèdent non seulement des viscosités à l'état fondu à t=0 qui n'atteignent pas la valeur de 13000 Pa.s requise mais encore sont totalement dépourvues de stabilité puisque la viscosité à t=30 min diminue fortement.

### Exemple 4 : Tenue à l'hydrolyse d'une formulation de l'invention (exemple 3) comparée à celle d'un BESNOP40TL

| | **BESNOP40TL** | **Exemple 3 de l'invention** |
|---|---|---|
| **Stabilité thermique à 140°C** | | |
| **½ vie** | 700h | **2000h** |
| **Tenue à l'hydrolyse** | | |
| **140°C eau Volvic pH4** | | |
| **Temps pour avoir 50% absolu d'allongement à la rupture** | 280h | **950h** |
| **Viscosité plan plan à 270°C 10 rad/sec, 5% déformation** | | |
| **T0** | 9000 | **14000** |
| **T = 30 min** | 32000 | **21000** |

Le produit BESNOP40TL est une référence Offshore Arkema PA11 + H₃PO₄ + plastifiant + stabilisant thermique.

Ce tableau montre que les composés de l'invention présentent une stabilité à l'hydrolyse et une viscosité à l'état fondu améliorée quel que soit le temps (t=0 ou t = 30 min).

### Exemple 5 : Comparaison des propriétés des compositions selon l'invention avec les compositions comparatives

| PA | Cat. (ppm) | Carb. % en poids | Stab. % en poids | Haute viscosité | Viscosité stable | Hyd. | Ox. |
|---|---|---|---|---|---|---|---|
| PA11 | 0 | 0 | 0 | - | ++ | - | - |
| PA11 | 0 | 1 | 0 | + | ++ | + | - |
| PA11 | 0 | 0 | 0,2 | - | ++ | + | ++ |
| PA11 | 0 | 1 | 0,2 | + | ++ | ++ | ++ |
| PA11 | 600 | 0 | 0 | ++ | - | - | - |
| PA11 | 600 | 0 | 0,2 | - | ++ | + | ++ |
| PA11 | 600 | 1 | 0 | - | - | + | - |
| **PA11** | **600** | **1** | **0,2** | **++** | **++** | **++** | **++** |

| | | | | | | | |
|---|---|---|---|---|---|---|---|
| PA 11 : viscosité inhérente 1,45. Cat. : catalyseur H₃PO₄. Carb. polycarbodiimide STABILISER 9000. Stab. : Stabilisant thermique au cuivre (Iodine 201). Hyd. : Résistance à l'hydrolyse. Ox.: Résistance à l'oxydation. - signifie que la valeur obtenue est insuffisante pour la propriété recherchée vis-à-vis des performances d'usage. + : signifie que la valeur obtenue est limite pour la propriété recherchée vis-à-vis des performances d'usage. ++ : signifie que la valeur obtenue est bonne pour la propriété recherchée vis-à-vis des performances d'usage. | | | | | | | |

Seule la composition comprenant à la fois un catalyseur, un polycarbodiimide et un stabilisant thermique permet d'obtenir une valeur bonne sur les six propriétés recherchées vis-à-vis des performances d'usage.

## Revendications

1. Utilisation d'au moins un catalyseur, d'au moins un stabilisant thermique au cuivre et d'au moins un oligo- ou poly-carbodiimide avec une matrice comprenant au moins un polyamide, pour constituer une composition présentant une viscosité à l'état fondu de 13000 à 23000 Pa.s, telle que déterminée par rhéologie oscillatoire à 270°C, à 10 rad/sec sous balayage d'azote avec 5% de déformation et un cisaillement de 10 sec-1 entre deux plans parallèles de 25 mm de diamètre et stable à la transformation, c'est-à-dire que la viscosité à l'état fondu n'évolue pas de plus de 70% en fonction du temps, et précisément entre 1 minute (temps nécessaire pour fondre le produit) et au moins 30 minutes, en particulier entre 1 minute et 30 minutes, en particulier à l'extrusion.

2. Utilisation selon la revendication 1, **caractérisée en ce que** ladite viscosité à l'état fondu de la dite composition, déterminée par rhéologie oscillatoire à 270°C à 10 rad/sec sous balayage d'azote avec 5% de déformation et un cisaillement de 10 sec-1 sur un appareil Physica MCR301 entre deux plans parallèles de 25 mm de diamètre, n'évolue pas dans une proportion de plus de 20% entre 1 minute et au moins 5 minutes, en particulier entre 1 minute et 5 minutes.

3. Utilisation selon la revendication 1 ou 2, **caractérisée en ce que** ladite composition présente de plus une tenue à la thermo-oxydation, **caractérisée par** la demi-vie (en heures) des matériaux et qui correspond au temps au bout duquel les éprouvettes ISO 527-2 1BA, vieillies dans l'air à 140°C, ont perdu la moitié de leur allongement à la rupture initial mesuré selon la norme ISO 527-2 (2012).

4. Utilisation selon l'une des revendications 1 à 3, **caractérisée en ce que** ladite viscosité à l'état fondu est comprise de 13000 à 23000 Pa.s durant au moins 30 minutes, telle que déterminée par rhéologie oscillatoire à 270°C, à 10 rad/sec sous balayage d'azote avec 5% de déformation et un cisaillement de 10 sec-1 entre deux plans parallèles de 25 mm de diamètre.

5. Utilisation selon l'une des revendications 1 à 4, **caractérisée en ce que** la proportion en poids de catalyseur est comprise de 50 ppm à 5000 ppm, en particulier de 100 à 3000 ppm par rapport au poids total de la composition.

6. Utilisation selon l'une des revendications 1 à 5, **caractérisée en ce que** le catalyseur est choisi parmi l'acide phosphorique (H₃PO₄), l'acide phosphoreux (H₃PO₃), l'acide hypophosphoreux (H₃PO₂), ou un mélange de ceux-ci.

7. Utilisation selon l'une des revendications 1 à 6, **caractérisée en ce que** la proportion en poids de stabilisant thermique au cuivre est comprise de 0,05% à 1%, en particulier de 0,05% à 0,3% par rapport au poids total de la composition.

8. Utilisation selon la revendication 7, **caractérisée en ce que** le stabilisant thermique au cuivre est un mélange d'iodure de potassium et d'iodure de cuivre.

9. Utilisation selon l'une des revendications 1 à 8, **caractérisée en ce que** la proportion en poids d'oligo- ou poly-carbodiimide est comprisede 0,1 à 3%, en particulier de 0,5 à 2%, notamment égale à 1% par rapport au poids total de la composition.

10. Utilisation selon l'une des revendications 1 à 9, **caractérisée en ce que** le polymère thermoplastique est un polyamide choisi parmi un polyamide aliphatique, un polyamide cycloaliphatique, un polyamide aromatique ou un mélange de ceux-ci.

11. Utilisation selon la revendication 10, **caractérisée en ce que** le polyamide présente une Tf comprise de 160°C à 290°C déterminée selon la norme ISO 11357-3 (2013).

12. Utilisation selon la revendication 10 ou 11, **caractérisée en ce que** le polyamide est choisi parmi le polyamide est choisi parmi : le PA11, le PA12, le 11/10.T, le PA 10.10, le PA 10.12 et les copolyamides 11/12 ayant soit plus de 90 % de motifs 11 soit plus de 90 % de motifs 12.

13. Composition présentant une viscosité à l'état fondu de 13000 à 23000 Pa.s, telle que déterminée par rhéologie oscillatoire à 270°C, à 10 rad/sec sous balayage d'azote avec 5% de déformation et un cisaillement de 10 sec-1 entre deux plans parallèles de 25 mm de diamètre et stable à la transformation, c'est-à-dire que la viscosité à l'état fondu n'évolue pas de plus de 70% en fonction du temps, et précisément entre 1 minute (temps nécessaire pour fondre le produit) et au moins 30 minutes, en particulier entre 1 minute et 30 minutes, telle que définie dans la revendication 1, **caractérisée en ce qu'**elle comprend par rapport au poids total de la composition:
a. 20,5 à 99,845% en poids d'au moins un polyamide tel que défini dans l'une des revendications 11 à 13 ;
b. 0,005 à 0,5% en poids d'au moins un catalyseur ;
c. 0,05 à 1% en poids d'au moins un stabilisant thermique au cuivre ;
d. 0,1 à 3% en poids d'au moins un oligo- ou poly-carbodiimide ;
e. 0 à 15% d'au moins un plastifiant ;
f. 0 à 30% d'au moins une polyoléfine ;
g. 0 à 30% d'au moins un additif.

14. Composition selon la revendication 13, **caractérisée en ce qu'**elle est constituée de:
a. 64,5 à 98,745% en poids d'au moins un polyamide tel que défini dans l'une des revendications 10 à 12;
b. 0,005 à 0,5% en poids d'au moins un catalyseur ;
c. 0,05 à 1% en poids d'au moins un stabilisant thermique au cuivre ;
d. 0,1 à 3% en poids d'au moins un oligo- ou poly-carbodiimide ;
e. 1 à 30% d'au moins une polyoléfine ;
f. 0,1 à 1% d'au moins un additif

15. Composition selon la revendication 13, **caractérisée en ce qu'**elle est constituée de:
a. 49,50 à 97,745% en poids d'au moins un polyamide tel que défini dans l'une des revendications 10 à 12 ;
b. 0,005 à 0,5% en poids d'au moins un catalyseur ;
c. 0,05 à 1% en poids d'au moins un stabilisant thermique au cuivre ;
d. 0,1 à 3% en poids d'au moins un oligo- ou poly-carbodiimide ;
e. 1 à 15% d'au moins plastifiant ;
f. 1 à 30% d'au moins une polyoléfine ;
g. 0,1 à 1% d'au moins un additif ;

16. Composition selon l'une des revendications 13 à 15, **caractérisée en ce que** le polyamide est choisi parmi un polyamide aliphatique, un polyamide cycloaliphatique, un polyamide aromatique ou un mélange de ceux-ci.

17. Composition selon l'une des revendications 13 à 16, **caractérisée en ce que** le polyamide présente une Tf comprise de 160°C à 290°C déterminée selon la norme ISO 11357-3 (2013).

18. Composition selon l'une des revendications 13 à 17, **caractérisée en ce que** le polyamide est choisi parmi : le PA11, le PA12, le 11/10.T, le PA 10.10, le PA 10.12 et les copolyamides 11/12 ayant soit plus de 90 % de motifs 11 soit plus de 90 % de motifs 12.

19. Composition selon l'une des revendications 13 à 18, **caractérisée en ce que** le catalyseur est choisi parmi l'acide phosphorique (H₃PO₄), l'acide phosphoreux (H₃PO₃), l'acide hypophosphoreux (H₃PO₂), ou un mélange de ceux-ci.

20. Composition selon l'une des revendications 13 à 19, **caractérisée en ce que** le stabilisant thermique au cuivre est un mélange d'iodure de potassium et d'iodure de cuivre.

21. Utilisation d'une composition telle que définie dans l'une des revendications 13 à 20, pour la constitution d'une structure, telle que :
un tuyau flexible destiné au transport du gaz ou à l'exploitation des gisements de pétrole sous la mer,
un tuyau flexible pour l'automobile, notamment pour le transport de carburant (essence, diesel, biodiésel ou éthanol), pour la réfrigération, pour l'air conditionné, ou pour des conduites réalisées notamment en extrusion soufflage pour l'alimentation en air,
un corps creux, un moulage ou un article de sport.

22. Utilisation selon la revendication 21, **caractérisée en ce que** le un tuyau flexible destiné au transport du gaz ou à l'exploitation des gisements de pétrole sous la mer, présente une bonne tenue à la thermo-oxydation et une résistance à l'hydrolyse.

23. Utilisation selon la revendication 21 ou 22, **caractérisée en ce que** le tuyau présente une température de service d'au moins 70°C pendant 20 ans.

24. Utilisation selon l'une des revendications 21 à 23, **caractérisée en ce que** la composition est telle que définie dans l'une des revendications 15 et 17 à 22 et la structure est un tuyau destiné au transport du gaz.

25. Utilisation selon l'une des revendications 21 à 24, **caractérisée en ce que** la composition est telle que définie dans l'une des revendications 14 à 20 et la structure est un tuyau flexible destiné à l'exploitation des gisements de pétrole sous la mer.

26. Utilisation selon l'une des revendications 21 à 26, **caractérisée en ce que** la composition est telle que définie dans l'une des revendications 16 à 22 et la structure est un tuyau flexible pour l'automobile, notamment pour le transport de carburant (essence, diesel, biodiésel ou éthanol), pour la réfrigération, pour l'air conditionné, ou pour des conduites réalisées notamment en extrusion soufflage pour l'alimentation en air.

27. Tuyau flexible destiné au transport du gaz ou à l'exploitation des gisements de pétrole sous la mer, ou pour l'automobile, notamment pour le transport de carburant (essence, diesel, biodiésel ou éthanol), pour la réfrigération, pour l'air conditionné, pour l'alimentation en air, tel que défini dans la revendication 21, comprenant au moins une couche d'une composition telle que définie dans l'une des revendications 12 à 20.

28. Tuyau flexible selon la revendication 27, **caractérisé en ce que** ladite couche est la couche en contact avec le fluide et la composition est telle que définie dans l'une des revendications 13 et 15 à 20, destiné au transport du gaz.

29. Tuyau flexible selon la revendication 28, **caractérisé en ce qu'**il peut comprendre en outre au moins une seconde couche, notamment en thermoplastique.

30. Tuyau flexible selon la revendication 27, **caractérisé en ce que** la dite couche est la couche interne d'un tuyau flexible destiné à l'exploitation des gisements de pétrole sous la mer et la composition est telle que définie dans l'une des revendications 14 à 20.

31. Tuyau selon la revendication 27, **caractérisé en ce que** la dite couche est la couche externe d'un tuyau flexible destiné à l'exploitation des gisements de pétrole sous la mer et la composition est telle que définie dans l'une des revendications 14 à 20.

32. Tuyau selon la revendication 27, **caractérisé en ce qu'**il comprend une couche interne et une couche externe constituées d'une composition telle que définie dans l'une des revendications 14 à 20, lesdites couches internes et externes étant constituées de la même composition de l'invention ou chacune d'une composition différente de l'invention.

## Patentansprüche

1. Verwendung von mindestens einem Katalysator, von mindestens einem Kupfer-Wärmestabilisator und von mindestens einem Oligo- oder Polycarbodiimid mit einer Matrix, umfassend mindestens ein Polyamid, zum Bilden einer Zusammensetzung, die im geschmolzenen Zustand eine Viskosität von 13.000 bis 23.000 Pa.s aufweist, wie durch oszillatorische Rheologie bei 270 °C bei 10 rad/Sek unter Stickstoffspülung mit 5 % Verformung und einer Scherung von 10 Sek-1 zwischen zwei parallelen Ebenen von 25 mm Durchmesser bestimmt und stabil gegenüber Transformation, das heißt, dass sich die Viskosität im geschmolzenen Zustand als Funktion der Zeit, und präzise zwischen 1 Minute (zum Schmelzen des Produkts benötigte Zeit) und mindestens 30 Minuten, besonders zwischen 1 Minute und 30 Minuten, besonders bei der Extrusion nicht mehr als 70 % entwickelt.

2. Verwendung nach Anspruch 1, **dadurch gekennzeichnet, dass** die Viskosität im geschmolzenen Zustand der Zusammensetzung, bestimmt durch oszillatorische Rheologie bei 270 °C bei 10 rad/Sek unter Stickstoffspülung mit 5 % Verformung und einer Scherung von 10 Sek-1 auf einem Physica-MCR301-Gerät zwischen zwei parallelen Ebenen von 25 mm Durchmesser, sich zwischen 1 Minute und mindestens 5 Minuten, besonders zwischen 1 Minute und 5 Minuten, nicht in einer Proportion von mehr als 20 % entwickelt.

3. Verwendung nach Anspruch 1 oder 2, **dadurch gekennzeichnet, dass** die Zusammensetzung ferner eine Beständigkeit gegenüber Wärmeoxidation aufweist, das heißt, sie weist im geschmolzenen Zustand während mindestens 30 Minuten eine Viskosität von 13000 bis 23000 Pa.s auf, wie durch oszillatorische Rheologie bei 270 °C (Ebene Ebene) bestimmt.

4. Verwendung nach einem der Ansprüche 1 bis 3, **dadurch gekennzeichnet, dass** die Viskosität im geschmolzenen Zustand während mindestens 30 Minuten im Bereich von 13.000 bis 23.000 Pa.s liegt, wie durch oszillatorische Rheologie bei 270 °C bei 10 rad/Sek unter Stickstoffspülung mit 5 % Verformung und einer Scherung von 10 Sek-1 zwischen zwei parallelen Ebenen von 25 mm Durchmesser bestimmt.

5. Verwendung nach einem der Ansprüche 1 bis 4, **dadurch gekennzeichnet, dass** die Gewichtsproportion des Katalysators bezogen auf das Gesamtgewicht der Zusammensetzung im Bereich von 50 ppm bis 5000 ppm, besonders von 100 bis 3.000 ppm, liegt.

6. Verwendung nach einem der Ansprüche 1 bis 5, **dadurch gekennzeichnet, dass** der Katalysator ausgewählt ist aus Phosphorsäure (H₃PO₄), Phosphonsäure (H₃PO₃), Phosphinsäure (H₃PO₂) oder einer Mischung aus diesen.

7. Verwendung nach einem der Ansprüche 1 bis 6, **dadurch gekennzeichnet, dass** die Gewichtsproportion des Kupfer-Wärmestabilisators bezogen auf das Gesamtgewicht der Zusammensetzung im Bereich von 0,05 % bis 1 %, besonders von 0,05 % bis 0,3 %, liegt.

8. Verwendung nach Anspruch 7, **dadurch gekennzeichnet, dass** der Kupfer-Wärmestabilisator eine Mischung ist aus Kaliumiodid und Kupferiodid.

9. Verwendung nach einem der Ansprüche 1 bis 8, **dadurch gekennzeichnet, dass** die Gewichtsproportion des Oligo- oder Polycarbodiimids bezogen auf das Gesamtgewicht der Zusammensetzung im Bereich von 0,1 bis 3 %, besonders von 0,5 bis 2 %, liegt, insbesondere bei gleich 1 %.

10. Verwendung nach einem der Ansprüche 1 bis 9, **dadurch gekennzeichnet, dass** das thermoplastische Polymer ein Polyamid ist, ausgewählt aus einem aliphatischen Polyamid, einem cycloaliphatischen Polyamid, einem aromatischen Polyamid oder einer Mischung aus diesen.

11. Verwendung nach Anspruch 10, **dadurch gekennzeichnet, dass** das Polyamid eine Tf im Bereich von 160 °C bis 290 °C aufweist, bestimmt gemäß dem Standard ISO 11357-3 (2013).

12. Verwendung nach Anspruch 10 oder 11, **dadurch gekennzeichnet, dass** das Polyamid ausgewählt ist aus: PA11, PA12, 11/10.T, PA 10.10, PA 10.12 und Copolyamiden 11/12, die entweder mehr als 90 % Einheiten 11 oder mehr als 90 % Einheiten 12 aufweisen.

13. Zusammensetzung, die im geschmolzenen Zustand eine Viskosität von 13.000 bis 23.000 Pa.s aufweist, wie durch oszillatorische Rheologie bei 270 °C bei 10 rad/Sek unter Stickstoffspülung mit 5 % Verformung und einer Scherung von 10 Sek-1 zwischen zwei parallelen Ebenen von 25 mm Durchmesser bestimmt, und stabil gegenüber Transformation, das heißt, dass sich die Viskosität im geschmolzenen Zustand als Funktion der Zeit, und präzise zwischen 1 Minute (zum Schmelzen des Produkts benötigte Zeit) und mindestens 30 Minuten, besonders zwischen 1 Minute und 30 Minuten, wie in Anspruch 1 definiert, nicht mehr als 70 % entwickelt, **dadurch gekennzeichnet, dass** sie bezogen auf das Gesamtgewicht der Zusammensetzung umfasst:
a. 20,5 bis 99,845 Gewichts-% von mindestens einem Polyamid wie nach einem der Ansprüche 10 bis 12 definiert;
b. 0,005 bis 0,5 Gewichts-% von mindestens einem Katalysator;
c. 0,05 bis 1 Gewichts-% von mindestens einem Kupfer-Wärmestabilisator;
d. 0,1 bis 3 Gewichts-% von mindestens einem Oligo- oder Polycarbodiimid;
e. 0 bis 15 % von mindestens einem Weichmacher;
f. 0 bis 30 % von mindestens einem Polyolefin;
g. 0 bis 30 % von mindestens einem Additiv.

14. Zusammensetzung nach Anspruch 13, **dadurch gekennzeichnet, dass** sie besteht aus:
a. 64,5 bis 98,745 Gewichts-% von mindestens einem Polyamid wie nach einem der Ansprüche 10 bis 12 definiert;
b. 0,005 bis 0,5 Gewichts-% von mindestens einem Katalysator;
c. 0,05 bis 1 Gewichts-% von mindestens einem Kupfer-Wärmestabilisator;
d. 0,1 bis 3 Gewichts-% von mindestens einem Oligo- oder Polycarbodiimid;
e. 1 bis 30 % von mindestens einem Polyolefin;
f. 0,1 bis 1 % von mindestens einem Additiv

15. Zusammensetzung nach Anspruch 13, **dadurch gekennzeichnet, dass** sie besteht aus:
a. 49,50 bis 97,745 Gewichts-% von mindestens einem Polyamid wie nach einem der Ansprüche 10 bis 12 definiert;
b. 0,005 bis 0,5 Gewichts-% von mindestens einem Katalysator;
c. 0,05 bis 1 Gewichts-% von mindestens einem Kupfer-Wärmestabilisator;
d. 0,1 bis 3 Gewichts-% von mindestens einem Oligo- oder Polycarbodiimid;
e. 1 bis 15 % von mindestens einem Weichmacher;
f. 1 bis 30 % von mindestens einem Polyolefin;
g. 0,1 bis 1 % von mindestens einem Additiv;

16. Zusammensetzung nach einem der Ansprüche 13 bis 15, **dadurch gekennzeichnet, dass** das Polyamid ein Polyamid ist, ausgewählt aus einem aliphatischen Polyamid, einem cycloaliphatischen Polyamid, einem aromatischen Polyamid oder einer Mischung aus diesen.

17. Zusammensetzung nach einem der Ansprüche 13 bis 16, **dadurch gekennzeichnet, dass** das Polyamid eine Tf im Bereich von 160 °C bis 290 °C aufweist, bestimmt gemäß dem Standard ISO 11357-3 (2013).

18. Zusammensetzung nach einem der Ansprüche 13 bis 17, **dadurch gekennzeichnet, dass** das Polyamid ausgewählt ist aus: PA11, PA12, 11/10.T, PA 10.10, PA 10.12 und Copolyamiden 11/12, die entweder mehr als 90 % Einheiten 11 oder mehr als 90 % Einheiten 12 aufweisen.

19. Zusammensetzung nach einem der Ansprüche 13 bis 18, **dadurch gekennzeichnet, dass** der Katalysator ausgewählt ist aus Phosphorsäure (H₃PO₄), Phosphonsäure (H₃PO₃), Phosphinsäure (H₃PO₂) oder einer Mischung aus diesen.

20. Zusammensetzung nach einem der Ansprüche 13 bis 19, **dadurch gekennzeichnet, dass** der Kupfer-Wärmestabilisator eine Mischung aus Kaliumiodid und Kupferiodid ist.

21. Verwendung einer Zusammensetzung wie nach einem der Ansprüche 13 bis 20 definiert, zum Aufbau einer Struktur wie:
ein zum Transport von Gas oder der Ausbeutung von Erdöllagerstätten unter dem Meer bestimmtes flexibles Rohr,
ein flexibles Rohr für das Automobil, insbesondere für den Transport von Treibstoff (Benzin, Diesel, Biodiesel oder Ethanol), für die Kühlung, für klimatisierte Luft oder für insbesondere durch Blasextrusion zur Luftzufuhr ausgeführten Leitungen, einen Hohlkörper, ein Formteil oder einen Sportartikel.

22. Verwendung nach Anspruch 21, **dadurch gekennzeichnet, dass** das zum Transport von Gas oder zur Ausbeutung von Erdöllagerstätten unter dem Meer bestimmte flexible Rohr eine gute Beständigkeit gegenüber Wärmeoxidation und Widerstandsfähigkeit gegenüber Hydrolyse aufweist, das heißt, das die Halbwertszeit der Materialien, die der Zeit entspricht, an deren Ende die Prüfkörper ISO 527-2 1BA, bei 140 °C in Luft gealtert, die Hälfte ihrer anfänglichen Bruchdehnung, gemessen nach Standard ISO 527-2 (2012), eingebüßt haben, mindestens 80 Tage beträgt, und das die Halbwertszeit der Rohre, die der Zeiten entspricht, an deren Ende die geprüften Rohre nach Aussetzen gegenüber warmen Wasser oder einer Mischung aus Wasser und Ethylenglykol bei 140 °C brechen, mit einer Bruchdehnungsprüfung nach dem Standard ISO 527-2 (2012) mindestens 40 Tage beträgt.

23. Verwendung nach Anspruch 21 oder 22, **dadurch gekennzeichnet, dass** das Rohr eine Betriebstemperatur von mindestens 70 °C während 20 Jahren aufweist.

24. Verwendung nach Anspruch 21 oder 23, **dadurch gekennzeichnet, dass** die Zusammensetzung wie in einem der Ansprüche 14 und 16 bis 20 definiert ist und die Struktur ein Rohr ist, das zum Transport von Gas bestimmt ist.

25. Verwendung nach Anspruch 21 bis 24, **dadurch gekennzeichnet, dass** die Zusammensetzung wie in einem der Ansprüche 15 bis 20 definiert ist und die Struktur ein flexibles Rohr ist, das zur Ausbeutung von Erdöllagerstätten bestimmt ist.

26. Verwendung nach einem der Ansprüche 21 bis 25, **dadurch gekennzeichnet, dass** die Zusammensetzung wie in einem der Ansprüche 15 bis 20 definiert ist und die Struktur ein flexibles Rohr für das Automobil, insbesondere für den Transport von Treibstoff (Benzin, Diesel, Biodiesel oder Ethanol), für die Kühlung, für klimatisierte Luft oder für insbesondere durch Blasextrusion zur Luftzufuhr ausgeführten Leitungen ist.

27. Flexibles Rohr, bestimmt zum Transport von Gas oder zur Ausbeutung von Erdöllagerstätten unter dem Meer oder für das Automobil, insbesondere für den Transport von Treibstoff (Benzin, Diesel, Biodiesel oder Ethanol), für die Kühlung, für klimatisierte Luft, für die Luftzufuhr wie in Anspruch 21 definiert, umfassend mindestens eine Schicht einer Zusammensetzung wie in einem der Ansprüche 13 bis 20 definiert.

28. Flexibles Rohr nach Anspruch 27, **dadurch gekennzeichnet, dass** die Schicht eine Schicht in Kontakt mit dem Fluid ist und die Zusammensetzung wie in einem der Ansprüche 14 und 16 bis 20 definiert ist, bestimmt zum Transport von Gas.

29. Flexibles Rohr nach Anspruch 28, **dadurch gekennzeichnet, dass** es des Weiteren mindestens eine zweite Schicht umfassen kann, insbesondere aus Thermoplast.

30. Flexibles Rohr nach Anspruch 27, **dadurch gekennzeichnet, dass** die Schicht die interne Schicht eines flexiblen Rohrs ist, bestimmt zur Ausbeutung von Erdöllagerstätten unter dem Meer, und die Zusammensetzung wie in einem der Ansprüche 15 bis 20 definiert ist.

31. Rohr nach Anspruch 27, **dadurch gekennzeichnet, dass** die Schicht die externe Schicht eines flexiblen Rohrs ist, bestimmt zur Ausbeutung von Erdöllagerstätten unter dem Meer, und die Zusammensetzung wie in einem der Ansprüche 15 bis 20 definiert ist.

32. Rohr nach Anspruch 27, **dadurch gekennzeichnet, dass** es eine interne Schicht und eine externe Schicht umfasst, die aus einer Zusammensetzung bestehen wie in einem der Ansprüche 15 bis 20 definiert, wobei die internen und externen Schichten aus der gleichen erfindungsgemäßen Zusammensetzung oder jeweils aus einer von der Erfindung verschiedenen Zusammensetzung bestehen.

## Claims

1. Use of at least one catalyst, at least one copper-based thermal stabilizer and at least one oligo- or poly-carbodiimide with a matrix comprising at least one polyamide, in order to form a composition having a molten viscosity of 13,000 to 23,000 Pa·s, as determined by oscillatory rheology at 270°C, at 10 rad/s under nitrogen sweeping with 5% deformation and shearing of 10 s⁻¹ between two 25 mm diameter parallel plates and stable under transformation, meaning that the molten viscosity does not change by more than 70% as a function of time, and specifically between 1 minute (time necessary to melt the product) and at least 30 minutes, in particular between 1 minute and 30 minutes, in particular on extrusion.

2. The use according to claim 1, **characterized in that** said molten viscosity of said composition, determined by oscillatory rheology at 270°C at 10 rad/s under nitrogen sweeping with 5% deformation and shearing of 10 s⁻¹ on a Physica MCR301 device between two 25 mm diameter parallel plates, does not change by a proportion of over 20% between 1 minute and at least 5 minutes, in particular between 1 minute and 5 minutes.

3. The use according to claim 1 or 2, **characterized in that** said composition further has a thermal-oxidation resistance, meaning that it has a molten viscosity of 13,000 to 23,000 Pa·s, as determined by oscillatory rheology at 270°C (plate-plate), for at least 30 minutes.

4. The use according to one of claims 1 to 3, **characterized in that** said molten viscosity is comprised from 13,000 to 23,000 Pa·s for at least 30 minutes, as determined by oscillatory rheology at 270°C, 10 rad/s under nitrogen sweeping with 5% deformation and shearing of 10 s⁻¹ between two 25 mm diameter parallel plates.

5. The use according to one of claims 1 to 4 **characterized in that** the proportion of catalyst by weight is comprised from 50 ppm to 5000 ppm, in particular from 100 to 3000 ppm relative to the total weight of the composition.

6. The use according to one of claims 1 to 5, **characterized in that** the catalyst is selected from phosphoric acid (H₃PO₄), phosphorous acid (H₃PO₃), hypophosphorous acid (H₃PO₂), or a mixture thereof.

7. The use according to one of claims 1 to 6 **characterized in that** the proportion of copper-based thermal stabilizer by weight is comprised from 0.05% to 1%, in particular from 0.05% to 0.3% relative to the total weight of the composition.

8. The use according to claim 7, **characterized in that** the copper-based thermal stabilizer is a mixture of potassium iodide and copper iodide.

9. The use according to one of claims 1 to 8, **characterized in that** the proportion of oligo- or poly-carbodiimide by weight is comprised from 0.1 to 3%, in particular from 0.5 to 2%, in particular equal to 1% relative to the total weight of the composition.

10. The use according to one of claims 1 to 9, **characterized in that** the thermoplastic polymer is a polyamide selected from an aliphatic polyamide, a cycloaliphatic polyamide, an aromatic polyamide, or a mixture thereof.

11. The use according to claim 10, **characterized in that** the polyamide has a melting point comprised from 160°C to 290°C determined according to the ISO 11357-3 (2013) standard.

12. The use according to claim 10 or 11, **characterized in that** the polyamide is selected from: PA11, PA12, 11/10.T, PA10.10, PA10.12 and 11/12 copolyamides having either over 90% 11 units or over 90% 12 units.

13. A composition having a molten viscosity of 13,000 to 23,000 Pa·s, as determined by oscillatory rheology at 270°C, at 10 rad/s under nitrogen sweeping with 5% deformation and shearing of 10 s⁻¹ between two 25 mm diameter parallel plates stable under transformation, meaning that the molten viscosity does not change more than 70% as a function of time, and specifically between 1 minute (time necessary to melt the product) and at least 30 minutes, in particular between 1 minute and 30 minutes, as defined in claim 1, **characterized in that it comprises** relative to the total weight of the composition:
a. 20.5 to 99.845% by weight of at least one polyamide as defined in one of claims 10 to 12;
b. 0.005 to 0.5% by weight of at least one catalyst;
c. 0.05 to 1% by weight of at least one copper-based thermal stabilizer;
d. 0.1 to 3% by weight of at least one oligo- or poly-carbodiimide;
e. 0 to 15% of at least one plasticizer;
f. 0 to 30% of at least one polyolefin;
g. 0 to 30% of at least one additive.

14. The composition according to claim 13, **characterized in that** it is composed of:
a. 64.5 to 98.745% by weight of at least one polyamide as defined in one of claims 10 to 12;
b. 0.005 to 0.5% by weight of at least one catalyst;
c. 0.05 to 1% by weight of at least one copper-based thermal stabilizer;
d. 0.1 to 3% by weight of at least one oligo- or poly-carbodiimide;
e. 1 to 30% of at least one polyolefin;
f. 0.1 to 1% of at least one additive

15. The composition according to claim 13, **characterized in that** it is composed of:
a. 49.50 to 97.745% by weight of at least one polyamide as defined in one of claims 10 to 12;
b. 0.005 to 0.5% by weight of at least one catalyst;
c. 0.05 to 1% by weight of at least one copper-based thermal stabilizer;
d. 0.1 to 3% by weight of at least one oligo- or poly-carbodiimide;
e. 1 to 15% of at least one plasticizer;
f. 1 to 30% of at least one polyolefin;
g. 0.1 to 1% of at least one additive

16. The composition according to one of claims 13 to 15, **characterized in that** the polyamide is selected from an aliphatic polyamide, a cycloaliphatic polyamide, an aromatic polyamide, or a mixture thereof.

17. The composition according to one of claims 13 to 16, **characterized in that** the polyamide has a melting point comprised between 160°C to 290°C determined according to the ISO 11357-3 (2013) standard.

18. The composition according to one of claims 13 to 17, **characterized in that** the polyamide is selected from: PA11, PA12, 11/10.T, PA10.10, PA10.12 and 11/12 copolyamides having either over 90% 11 units or over 90% 12 units.

19. The composition according to one of claims 13 to 18, **characterized in that** the catalyst is selected from phosphoric acid (H₃PO₄), phosphorous acid (H₃PO₃), hypophosphorous acid (H₃PO₂), or a mixture thereof.

20. The composition according to one of claims 13 to 19, **characterized in that** the copper-based thermal stabilizer is a mixture of potassium iodide and copper iodide.

21. The use of a composition as defined in one of claims 13 to 20, in order to form a structure, such as:
a flexible hose intended for transporting gas or for extracting offshore oil deposits;
a flexible hose for motor vehicles, in particular for fuel transport (e.g. gasoline, diesel, biodiesel or ethanol), for refrigeration, for conditioned air, or for air supply ducts made in particular by extrusion blow molding,
a hollow body, a molding or sports gear.

22. The use according to claim 21, **characterized in that** the flexible hose intended for transporting gas or for extracting offshore oil deposits has a good thermal-oxidation resistance and a hydrolysis resistance, meaning that the half-life of the materials, corresponding to the time at the end of which the ISO 527-2 1BA test specimens, aged in air at 140°C, have lost half of their initial elongation at break measured according to the ISO 527-2 (2012) standard, is at least 80 days and that the half-life of the tubes, corresponding to the time at the end of which the tested hoses break after exposure to hot water or a hot water and ethylene glycol mixture at 140°C, with an elongation at break test according to ISO 527-2 (2012) standard, is at least 40 days.

23. The use according to claim 21 or 22, **characterized in that** the hose has a service temperature of at least 70°C for 20 years.

24. The use according to one of claims 21 to 23, **characterized in that** the composition is as defined in one of claims 14 and 16 to 20 and the structure is a hose intended for transporting gas.

25. The use according to one of claims 21 to 24, **characterized in that** the composition is as defined in one of claims 15 to 20 and the structure is a flexible hose intended for extracting offshore oil deposits.

26. The use according to one of claims 21 to 25, **characterized in that** the composition is as defined in one of claims 15 to 20 and the structure is a flexible hose for motor vehicles, in particular for fuel transport (e.g. gasoline, diesel, biodiesel or ethanol), for refrigeration, for conditioned air, or for air supply ducts made in particular by extrusion blow molding.

27. A flexible hose intended for transporting gas or for extracting offshore oil deposits, or for motor vehicles, in particular for fuel transport (e.g. gasoline, diesel, biodiesel or ethanol), for refrigeration, for conditioned air, or for air supply, as defined in claim 21, comprising at least one layer of one composition as defined in one of claims 13 to 20.

28. The flexible hose according to claim 27, **characterized in that** said layer is the layer in contact with the fluid and the composition is as defined in one of claims 14 and 16 to 20, intended for transporting gas.

29. The flexible hose according to claim 28, **characterized in that** it may further comprise at least one second layer, in particular of thermoplastic.

30. The flexible hose according to claim 27, **characterized in that** said layer is the inner layer of a flexible hose intended for extracting offshore oil deposits and the composition is as defined in one of claims 15 to 20.

31. The hose according to claim 27, **characterized in that** said layer is the outer layer of a flexible hose intended for extracting offshore oil deposits and the composition is as defined in one of claims 15 to 20.

32. The hose according to claim 27, **characterized in that** it comprises an inner layer and an outer layer made of a composition as defined in one of claims 15 to 20, where said inner and outer layers are made from the same composition of the invention or each from a different composition of the invention.
